(19) Europäisches Patentamt / European Patent Office / Office européen des brevets

(11) **EP 4 210 252 A1**

(12) **EUROPEAN PATENT APPLICATION**
published in accordance with Art. 153(4) EPC

(43) Date of publication:
**12.07.2023 Bulletin 2023/28**

(21) Application number: **21874417.5**

(22) Date of filing: **27.09.2021**

(51) International Patent Classification (IPC):
**H04L 1/00** (2006.01)    **H04L 25/03** (2006.01)
**G06N 3/02** (2006.01)

(52) Cooperative Patent Classification (CPC):
**G06N 3/02; G06N 3/04; H04L 1/00; H04L 25/03**

(86) International application number:
**PCT/CN2021/120839**

(87) International publication number:
**WO 2022/068757 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 CN 202011062368**

(71) Applicant: **Huawei Technologies Co., Ltd.**
**Shenzhen, Guangdong 518129 (CN)**

(72) Inventors:
• **XU, Chen**
  **Shenzhen, Guangdong 518129 (CN)**
• **ZHANG, Gongzheng**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**
• **WANG, Jun**
  **Shenzhen, Guangdong 518129 (CN)**
• **TONG, Wen**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **NEURAL NETWORK-BASED COMMUNICATION METHOD AND RELATED APPARATUS**

(57)    Embodiments of this application disclose a neural network-based communication method and a related apparatus. Specifically, joint training optimization is performed on an encoding neural network used by a transmit end and a decoding neural network used by a receive end. A first neural network in the encoding neural network reuses the decoding neural network and a parameter of the decoding neural network. In this way, the decoding neural network provides a part of prior information for the encoding neural network, so that the encoding neural network can more accurately predict a benefit of an action, thereby reducing a variance of gradient estimation, accelerating a network convergence speed, and improving convergence performance.

Transmit end

801. The transmit end obtains a first data stream

802. The transmit end processes the first data stream by using an encoding neural network, to obtain a first symbol stream

803. The transmit end sends the first symbol stream to the receive end

Receive end

804. The receive end processes the first symbol stream by using a decoding neural network, to obtain a second data stream

805. The receive end trains the decoding neural network based on the first data stream and the second data stream

806. The receive end sends a first function, a second function, a first gradient, and/or a first weight to the transmit end

807. The transmit end trains the encoding neural network by using the first function, the second function, the first gradient, and/or the first weight

FIG. 8

## Description

This application claims priority to Chinese Patent Application No. 202011062368.2, filed with the China National Intellectual Property Administration on September 30, 2020 and entitled "NEURAL NETWORK-BASED COMMUNICATION METHOD AND RELATED APPARATUS", which is incorporated herein by reference in its entirety.

## TECHNICAL FIELD

This application relates to the field of communication technologies, and in particular, to a neural network-based communication method and a related apparatus.

## BACKGROUND

A wireless communication system may be divided into three parts: a transmitter (transmitter), a channel (channel), and a receiver (receiver), where the channel is used to transmit a waveform signal exchanged between the transmit end and the receive end.

In a conventional wireless communication system, a transmit end includes a source encoder (source encoder) and a channel encoder (channel encoder), and a receive end includes a source decoder (source decoder) and a channel decoder (channel decoder). Source encoding is source symbol transformation with a purpose of improving communication effectiveness and reducing or eliminating a source redundancy degree. By processing a symbol output through source encoding, channel encoding enables the communication system to have a specific error correction capability and anti-interference capability, to reduce a bit error rate during channel transmission.

In order to optimize performance of the wireless communication system, the foregoing encoders and decoders need to be optimized. Because different encoders and decoders have independent mathematical models, the encoders and decoders are usually optimized independently based on their own mathematical models. However, in an actual application scenario, the channel, the transmit end, and the receive end have non-idealization and nonlinear problems. Therefore, a mathematical model mismatch may exist, which affects performance of the wireless communication system.

## SUMMARY

Embodiments of this application provide a neural network-based communication method, in which joint training optimization is performed on an encoding neural network used by a transmit end and a decoding neural network used by a receive end. A first neural network in the encoding neural network reuses the decoding neural network and a parameter of the decoding neural network. In this way, the decoding neural network provides a part of prior information for the encoding neural network, so that the encoding neural network can more accurately predict a benefit of an action, thereby reducing a variance of gradient estimation, accelerating a network convergence speed, and improving convergence performance.

According to a first aspect, an embodiment of this application proposes a neural network-based communication method, where the method is applied to the transmit end and includes:

the transmit end obtains a first data stream;
the transmit end processes the first data stream by using an encoding neural network, to obtain a first symbol stream, where the encoding neural network includes a first neural network, and the first neural network reuses a part or all of a decoding neural network and/or a parameter of a part or all of the decoding neural network; and
the transmit end outputs the first symbol stream.

Optionally, the encoding neural network may be deployed inside the transmit end, or may be deployed on a cloud server. When the encoding neural network is deployed on the cloud server, the transmit end requests a service of the encoding neural network from the cloud server.

Specifically, the transmit end obtains the first data stream, where the first data stream is a binary digit (Binary digit, BIT) stream. When communication interaction is performed between the transmit end and the receive end, the first data stream is normal data sent from the transmit end to the receive end. When neural network training is performed between the transmit end and the receive end, the first data stream is training sample data sent from the transmit end to the receive end.

When the first data stream is the training sample data, the first data stream may be preconfigured inside the transmit end, or the first data stream may be data input externally (relative to the transmit end), or the first data stream may be data negotiated between the transmit end and the receive end. This is not limited herein.

In an optional implementation, when the first data stream is preconfigured inside the transmit end, the first data stream may be further preconfigured inside the receive end.

In an optional implementation, the encoding neural network in this embodiment of this application is trained by using an "improved Actor-Critic (Actor-Critic)" algorithm. Based on a function, the encoding neural network may be divided into two parts: a first neural network and a second neural network. The first neural network is also referred to as a "critic neural network", and the second neural network is also referred to as an "actor neural network".

The first neural network may reuse all of the decoding neural network. For example, the first neural network uses all neuron structures of the decoding neural network (the neuron structure includes a quantity of neuron layers).

Alternatively, the first neural network may reuse a part of the decoding neural network (and/or a parameter of a part of the decoding neural network). For example, the first neural network uses a part of a neuron structure of the decoding neural network. A quantity of neuron layers in the first neural network may be consistent with a quantity of neuron layers in the decoding neural network, but only some neurons in the first neural network are consistent with neurons in the decoding neural network.

Alternatively, some neuron layers in the first neural network may be consistent with some neuron layers in the decoding neural network, but a quantity of neuron layers in the first neural network is inconsistent with a quantity of neuron layers in the decoding neural network.

Alternatively, some neurons in the first neural network may use a parameter of some neurons in the decoding neural network, or use a variation of a parameter of some neurons in the decoding neural network.

Alternatively, some neurons in the first neural network may use variations of some neurons in the decoding neural network. This is not limited herein.

It should be noted that "reusing" may indicate that the first neural network uses exactly the same neuron or neuron parameter in the decoding neural network, or the first neural network includes the neuron or the neuron parameter in the decoding neural network, or may indicate that the first neural network uses the variation of the neuron or the variation of the neuron parameter in the decoding neural network, or the like. This is not limited herein.

In this embodiment of this application, the first neural network in the encoding neural network reuses the decoding neural network and the parameter of the decoding neural network. In this way, the decoding neural network provides a part of prior information for the encoding neural network, so that the encoding neural network can more accurately predict a benefit of an action, thereby reducing a variance of gradient estimation, accelerating a network convergence speed, and improving convergence performance.

With reference to the first aspect, in a possible implementation of the first aspect, after the transmit end outputs the first symbol stream, the method further includes:
the transmit end receives a first weight, where the first weight is from the decoding neural network, and the first weight is used to train the first neural network.

In this embodiment of this application, the transmit end may further train the encoding neural network by using the first weight from the decoding neural network. The first weight is from the decoding neural network at the receive end, and is used to implement end-to-end joint optimization training.

With reference to the first aspect, in a possible implementation of the first aspect, after the transmit end outputs the first symbol stream, the method further includes:
the transmit end receives a first gradient, where the first gradient is from the decoding neural network, and the first gradient is used to train the first neural network.

In this embodiment of this application, the transmit end may further train the encoding neural network by using the first gradient from the decoding neural network. The first gradient is from the decoding neural network at the receive end, and is used to implement end-to-end joint optimization training.

With reference to the first aspect, in a possible implementation of the first aspect, after the transmit end outputs the first symbol stream, the method further includes:
the transmit end receives a first function, where the first function is from the decoding neural network, and the first function is used to train the first neural network.

Specifically, the first function may be the first function itself, or may be a function value (or a calculation result) of the first function, or may be the first function itself and the function value (or the calculation result) of the first function. This is not limited herein.

When the transmit end receives the first function, the transmit end performs calculation processing on the first function by using the encoding neural network (for example, the first neural network), to generate a new gradient. The new gradient is used to train (for example, update) the encoding neural network (for example, the first neural network).

In this embodiment of this application, the first function is originally a function used by the receive end side to train the decoding neural network. Therefore, after the first function is generated on the receive end side, the first function may be sent to the transmit end. The transmit end trains the first neural network by using the first function, to implement end-to-end joint optimization training.

With reference to the first aspect, in a possible implementation of the first aspect, after the transmit end outputs the first symbol stream, the method further includes:

the transmit end receives a second function, where the second function is from the decoding neural network, and the second function is a loss function and/or a reward function; and

the transmit end processes the second function by using the encoding neural network, to obtain a second gradient, where the second gradient is used to train the encoding neural network.

Specifically, the second function may be the second function itself, or may be a function value (or a calculation result) of the second function, or may be the second function itself and the function value (or the calculation result) of the second function. This is not limited herein.

When the transmit end receives the second function, the transmit end performs calculation processing on the second function by using the encoding neural network, to generate a second gradient. The second gradient is used to train (for example, update) the encoding neural network. Specifically, the encoding neural network performs calculation processing on the second function by using a gradient estimation (Gradient approximation) algorithm, to generate the second gradient. For example, the gradient approximation algorithm includes but is not limited to a stochastic gradient descent (stochastic gradient descent, SGD) algorithm, an "Adagrad algorithm", a root mean square prop (root mean square prop, RMSProp) algorithm, an adaptive moment estimation (Adaptive moment estimation) algorithm, and a momentum (momentum) algorithm.

In this embodiment of this application, the first function is originally a function used by the receive end side to train the decoding neural network. Therefore, after the first function is generated on the receive end side, the first function may be sent to the transmit end. The transmit end trains the first neural network by using the first function, to implement end-to-end joint optimization training.

With reference to the first aspect, in a possible implementation of the first aspect, that the transmit end outputs the first symbol stream includes:

the transmit end performs filtering processing on the first symbol stream, to obtain a first waveform signal, where an out-of-band signal is filtered out from the first waveform signal; and

the transmit end outputs the first waveform signal.

In this embodiment, to introduce intersymbol interference in the first symbol stream, the transmit end uses the first filter to perform filtering processing on the first symbol stream, to obtain the first waveform signal.

Optionally, a low-pass filter may be selected as the first filter.

Optionally, the first filter may further filter out an out-of-band signal in the first symbol stream, to limit a sending bandwidth.

In this embodiment of this application, to improve signal transmission performance, the transmit end may use the first filter to perform filtering processing on the first symbol stream, to obtain the first waveform signal.

With reference to the first aspect, in a possible implementation of the first aspect, that the transmit end processes the first data stream by using an encoding neural network, to obtain a first symbol stream includes:

the transmit end performs encoding processing on the first data stream, to obtain a first channel encoding code word; and

the transmit end processes the first channel encoding code word by using the encoding neural network, to obtain the first symbol stream.

Specifically, to avoid a dimension curse (dimension curse) problem (also referred to as a number of dimensions curse problem), related operations such as source encoding, channel encoding, modulation, and/or filtering may be further performed by another module in the transmit end, and the another module is referred to as a first module. The first module may be deployed on an input side of the encoding neural network, or may be deployed on an output side of the encoding neural network, or may be deployed on both the input side and the output side of the encoding neural network.

In this embodiment, the transmit end uses the first module to process the first data stream, to obtain the first channel encoding code word.

Optionally, the first module may be cascaded outside the communication system, to further improve error-free transmission performance of the system.

With reference to the first aspect, in a possible implementation of the first aspect, that the transmit end processes the first channel encoding code word by using the encoding neural network, to obtain the first symbol stream includes:

the transmit end processes the first channel encoding code word by using the encoding neural network, to obtain a first intermediate symbol; and

the transmit end performs filtering processing on the first intermediate symbol by using a filtering neural network, to obtain the first symbol stream, where intersymbol interference is introduced into the first symbol stream.

Specifically, the filtering neural network may be introduced on a receive end side. Optionally, the filtering neural network is deployed at a transmit end, and the filtering neural network is also deployed on the receive end side. Optionally, the filtering neural network is deployed only on the receive end side. The filtering neural network may be deployed between a second filter and an analog-to-digital converter, or the filtering neural network may be deployed between the analog-to-digital converter and a decoding neural network. This is not limited herein.

A 1 bit communication system based on oversampling is used as an example. Due to an information loss caused by 1 bit quantization, effective channel estimation and equalization cannot be finished in a conventional manner such as a pilot. Therefore, in a fading channel scenario, performance of the communication system is relatively poor. Fading refers to a phenomenon that an amplitude of a received signal changes randomly due to the change of the channel, that is, signal fading. A channel that causes signal fading is referred to as a fading channel.

Based on this, a filtering neural network is disposed, and the filtering neural network performs filtering processing on a first symbol stream output from the encoding neural network, to obtain a first intermediate symbol. When the communication system further includes an upsampling module, the upsampling module performs upsampling processing on the first intermediate symbol, to obtain a second intermediate symbol, where the second intermediate symbol is obtained by performing zero insertion processing on the first intermediate symbol after a sampling point. Then, a filtering neural network at the transmit end performs filtering processing on the second intermediate symbol to obtain the first symbol stream, where the filtering processing performed by the filtering neural network includes introducing intersymbol interference (Intersymbol Interference, ISI).

Optionally, the encoding neural network, the decoding neural network, and the filtering neural network may be jointly trained; or a pre-training model (for example, the encoding neural network and the decoding neural network that are trained on an additive white Gaussian noise (Additive White Gaussian Noise, AWGN) channel) may be used for initialization, and then the filtering neural network is trained individually.

In this embodiment of this application, the filtering neural network is added after the encoding neural network. In a fading channel scenario, the filtering neural network is combined with the encoding neural network and the decoding neural network for end-to-end training optimization. Specifically, the filtering neural network filters a symbol (the first symbol stream) mapped by the oversampled encoding neural network, to mitigate impact of a fading channel on a system. When quantization precision at the receive end is relatively high, the filtering neural network may play a pre-equalization effect after training. However, due to the information loss caused by low precision quantization, the filter neural network is more difficult to learn pre-equalization in the low precision quantization, and is more inclined to another local optimal solution. Through the joint training optimization of the encoding neural network, decoding neural network, and the filtering neural network, the transmit end and the receive end can use multipath interference of a channel to distinguish sent signals. This improves communication performance in the fading channel scenario.

According to a second aspect, an embodiment of this application proposes a neural network-based communication method, where the method is applied to a receive end and includes:

the receive end obtains a first data stream;
the receive end receives a first symbol stream, where the first symbol stream is from a transmit end, the first symbol stream is obtained by the transmit end by processing the first data stream by using an encoding neural network, the encoding neural network includes a first neural network, and the first neural network reuses a part or all of a decoding neural network and/or a parameter of a part or all of the decoding neural network;
the receive end processes the first symbol stream by using the decoding neural network, to obtain a second data stream; and
the receive end trains the decoding neural network based on the first data stream and the second data stream.

Specifically, on a transmit end side, the filtering processing is performed on the first symbol stream to obtain a first waveform signal. The transmit end sends the first waveform signal to the receive end through a channel. For ease of description, the channel is referred to as a first channel. The first waveform signal is affected by channel interference in a transmission process of the first channel. In this case, the receive end processes, by using the decoding neural network, the first waveform signal (the first symbol stream) interfered by the first channel, to obtain the second data stream.

For example, the decoding neural network includes but is not limited to a fully connected neural network, a radial basis function neural network, a convolutional neural network, a cyclic neural network, a Hopfield neural network, a restricted Boltzmann machine or deep confidence network. The encoding neural network may be any one of the foregoing neural networks, or the encoding neural network may be a combination of the foregoing plurality of neural networks. This is not limited herein.

It should be noted that the decoding neural network and the encoding neural network may use a same neural network, or may use different neural networks, or may use some same neural networks. This is not limited herein.

Optionally, a loss function that may be selected for the decoding neural network (and/or the encoding neural network) includes but is not limited to a binary cross entropy, a classification cross entropy, or a mean square error. For example, if the binary cross entropy is selected, an objective of end-to-end joint optimization in this embodiment of this application is to minimize a cross entropy between input and output.

In this embodiment of this application, the first neural network in the encoding neural network reuses the decoding neural network and the parameter of the decoding neural network. In this way, the decoding neural network provides a part of prior information for the encoding neural network, so that the encoding neural network can more accurately predict a benefit of an action, thereby reducing a variance of gradient estimation, accelerating a network convergence speed, and improving convergence performance. End-to-end joint optimization training further improves communication efficiency of the system.

With reference to the second aspect, in a possible implementation of the second aspect, that the receive end trains the decoding neural network based on the first data stream and the second data stream includes:

the receive end processes the first data stream and the second data stream by using the decoding neural network, to obtain a first function, where the first function is a loss function and/or a reward function;
the receive end processes the first function by using the decoding neural network, to obtain a first gradient; and
the receive end trains the decoding neural network by using the first gradient.

Specifically, the receive end trains the decoding neural network by using the first data stream and the second data stream. Specifically, the decoding neural network obtains a first function through calculation according to a first data stream and a second data stream, where the first function is a loss function and/or a reward function. The decoding neural network calculates a first gradient based on the first function, where the first gradient is used for further training (for example, updating) of the decoding neural network. Further, the decoding neural network may share a weight of the trained decoding neural network with the encoding neural network. For ease of description, the weight is referred to as a first weight.

With reference to the second aspect, in a possible implementation of the second aspect, after the receive end processes the first data stream and the second data stream by using the decoding neural network, to obtain a first function, the method further includes:
the receive end sends a first function to the transmit end, where the first function is used to train the first neural network in the encoding neural network.

In this embodiment of this application, after the first function is generated on the receive end side, the first function may be sent to the transmit end. The transmit end trains the first neural network by using the first function, to implement end-to-end joint optimization training.

With reference to the second aspect, in a possible implementation of the second aspect, after the receive end trains the decoding neural network by using the first gradient, the method further includes:
the receive end sends a first gradient to the transmit end, where the first gradient is used to train the first neural network in the encoding neural network.

In this embodiment of this application, the transmit end may further train the encoding neural network by using the first gradient from the decoding neural network. The first gradient is from the decoding neural network at the receive end, and is used to implement end-to-end joint optimization training.

With reference to the second aspect, in a possible implementation of the second aspect, after the receive end trains the decoding neural network by using the first gradient, the method further includes:

the receive end generates a first weight by using the decoding neural network, where the first weight is a weight of the decoding neural network; and
the receive end sends the first weight to the transmit end, where the first weight is used to train the first neural network in the encoding neural network.

In an optional implementation, the receive end transmits the second function, the first gradient, or the first weight to the transmit end by using a reward feedback frame or a gradient/weight sharing frame. The transmit end checks the reward feedback frame or the gradient/weight sharing frame from the receive end. When it is found that a cyclic redundancy check (cyclic redundancy check, CRC) error exists, the transmit end discards corresponding data (which refers to training data, for example, a second function, a first gradient, or a first weight) in the reward feedback frame or the gradient/weight sharing frame. The reason is that if a data frame is transmitted over an air interface, an error may occur, and incorrect data (which refers to training data, for example, the second function, the first gradient, or the first weight) may cause negative impact on reinforcement learning training. The negative impact can be effectively eliminated by using the foregoing method.

In this embodiment of this application, the transmit end may further train the encoding neural network by using the first weight from the decoding neural network. The first weight is from the decoding neural network at the receive end, and is used to implement end-to-end joint optimization training.

With reference to the second aspect, in a possible implementation of the second aspect, after the receive end trains the decoding neural network based on the first data stream and the second data stream, the method further includes:

the receive end processes the first data stream and the second data stream by using the decoding neural network, to obtain a second function, where the second function is a loss function and/or a reward function; and
the receive end sends the second function to the transmit end, where the second function is used to train the encoding neural network.

Specifically, the receive end processes the first data stream and the second data stream by using the decoding neural network, to obtain a function value of a second function, where the function value of the second function is used to train the encoding neural network (including the first neural network and a second neural network).

When the transmit end receives the second function, the transmit end performs calculation processing on the second function by using the encoding neural network, to generate a second gradient. The second gradient is used to train (for example, update) the encoding neural network. Specifically, the encoding neural network performs calculation processing on the second function by using a gradient estimation (Gradient approximation) algorithm, to generate the second gradient. For example, the gradient approximation algorithm includes but is not limited to a stochastic gradient descent (stochastic gradient descent, SGD) algorithm, an "Adagrad algorithm", a root mean square prop (root mean square prop, RMSProp) algorithm, an adaptive moment estimation (Adaptive moment estimation) algorithm, and a momentum (momentum) algorithm.

In this embodiment of this application, the transmit end may further train the encoding neural network by using the second function from the decoding neural network. The second function is from the decoding neural network at the receive end, and is used to implement end-to-end joint optimization training.

With reference to the second aspect, in a possible implementation of the second aspect, that the receive end processes the first symbol stream by using the decoding neural network, to obtain a second data stream includes:

the receive end receives a first waveform signal, where the first waveform signal is obtained by the transmit end by performing filtering processing on the first symbol stream;
the receive end performs quantization processing on the first waveform signal, to obtain a quantized symbol sequence, where one group of the first data streams is mapped to one or more of the quantized symbol sequences, bit flipping exists at most once in each symbol of the quantized symbol sequence, and the bit flipping is 0 to 1 or 1 to 0; and
the receive end processes a first sequence in the quantized symbol sequence by using the decoding neural network, to obtain the second data stream.

Specifically, when the first symbol stream includes x symbol groups, and each of the symbol groups includes n symbols, the first waveform signal includes x symbol groups, where x is a positive integer greater than or equal to 1, and n is a positive integer greater than or equal to 1; and when the receive end performs quantization processing on n symbols in the first waveform signal, to obtain the quantized symbol sequence, a length of the quantized symbol sequence is $nM$, where M is an oversampling rate of the receive end.

The quantized symbol sequence has the following features: one group of first data streams is mapped to one or more quantized symbol sequences, bit flipping exists at most once in each symbol of the quantized symbol sequence, and the bit flipping is 0 to 1 or 1 to 0.

Optionally, the analog-to-digital converter may be an oversampling analog-to-digital converter. When an oversampling rate of the analog-to-digital converter is M, a symbol rate of the quantized symbol sequence is $Mxf_s$, where M is an integer greater than 0. Oversampling (oversampling) is a process of sampling a signal at a frequency twice a signal bandwidth or at a highest frequency thereof.

Optionally, the analog-to-digital converter may alternatively be an analog-to-digital converter with limited sampling precision (quantization precision), for example, an oversampling analog-to-digital converter with the sampling precision of 1 bit (bit) (referred to as 1 bit oversampling ADC for short).

Optionally, a length of the first sequence in the quantized symbol sequence is $[(n - 1)M + 1, nM]$. For example, n = 2. That is, when the first symbol stream includes x symbol groups, and each symbol group includes two symbols, a length of a first sequence used by the decoding neural network for processing (also referred to as detection) is $[M + 1, 2M]$. A longer length of the first sequence indicates a higher oversampling rate, and better performance may be obtained. Because a plurality of first sequences may be corresponding to one piece of data, even if there is a difference among quantized symbol sequences generated after the oversampling process, data can be finally correctly restored. A plurality of sequences may be corresponding to one sequence, and one sequence cannot be corresponding to a plurality of pieces of data, so as to ensure a correctness percentage of decoding.

With reference to the second aspect, in a possible implementation of the second aspect, that the receive end performs quantization processing on the first waveform signal, to obtain a quantized symbol sequence includes:

the receive end receives the first waveform signal interfered by a first channel, where the first channel is a channel between the receive end and the transmit end; and
the receive end performs quantization processing on the first waveform signal interfered by the first channel, to obtain the quantized symbol sequence.

In this embodiment of this application, the receive end may perform training by using a waveform signal interfered by a channel, to improve applicability of a training result, and further improve performance of the communication system.

With reference to the second aspect, in a possible implementation of the second aspect, that the receive end processes the first symbol stream by using the decoding neural network, to obtain a second data stream includes:

the receive end processes the first waveform signal by using the decoding neural network, to obtain a first channel decoding code word or a log-likelihood ratio; and
the receive end processes the first channel decoding code word or the log-likelihood ratio, to obtain the second data stream.

Specifically, in an optional implementation, on the transmit end side, when related operations such as source encoding, channel encoding, modulation, and/or filtering of the first data stream are performed by another module (namely, the first module) in the transmit end, on the receive end side, processing such as source decoding, channel decoding, demodulation, and/or equalization (equalization) may be performed by the decoding neural network, or may be performed by another processing module independent of the decoding neural network. The another processing module is referred to as a second module. The second module may be deployed on an input side of the decoding neural network, or may be deployed on an output side of the decoding neural network, or may be deployed on both the input side and the output side of the decoding neural network. Specifically, the receive end first processes the first waveform signal by using the decoding neural network, to obtain a first channel decoding code word or a log-likelihood ratio (Log-likelihood Ratio, LLR). The log-likelihood ratio is usually used for soft decoding in communication. Second, the receive end processes the first channel decoding code word or the log-likelihood ratio by using the second module, to obtain the second data stream.

With reference to the second aspect, in a possible implementation of the second aspect, that the receive end performs quantization processing on the first waveform signal, to obtain a quantized symbol sequence includes:

the receive end performs filtering processing on the first waveform signal, to obtain a second waveform signal; and
the receive end performs quantization processing on the second waveform signal, to obtain a quantized symbol sequence.

In this embodiment, the receive end uses a second filter to perform filtering processing on a first waveform signal transmitted through the first channel, to obtain the second waveform signal. Optionally, a matched filter may be selected as the second filter

In an optional implementation, a same root-raised cosine filter (Root-raised cosine filter, RRC filter) may be selected as the first filter and the second filter. The RRC filter is configured to perform signal shaping (signal shaping).

According to a third aspect, an embodiment of this application provides a communication apparatus, including:

a transceiver module, configured to obtain a first data stream; and
a processing module, configured to process the first data stream by using an encoding neural network, to obtain a first symbol stream, where the encoding neural network includes a first neural network, and the first neural network reuses a part or all of a decoding neural network and/or a parameter of a part or all of the decoding neural network, where
the transceiver module is further configured to output the first symbol stream.

In some optional embodiments of this application,
the transceiver module is further configured to receive a first weight, where the first weight is from the decoding neural network, and the first weight is used to train the first neural network.

In some optional embodiments of this application,
the transceiver module is further configured to receive a first gradient, where the first gradient is from the decoding neural network, and the first gradient is used to train the first neural network.

In some optional embodiments of this application,

the transceiver module is further configured to receive a second function, where the second function is from the decoding neural network, and the second function is a loss function and/or a reward function; and
the transceiver module is further configured to process the second function by using the encoding neural network, to obtain a second gradient, where the second gradient is used to train the encoding neural network.

In some optional embodiments of this application,

the processing module is specifically configured to perform filtering processing on the first symbol stream, to obtain a first waveform signal, where an out-of-band signal is filtered out from the first waveform signal; and
the transceiver module is specifically configured to output the first waveform signal.

In some optional embodiments of this application,

the processing module is specifically configured to perform encoding processing on the first data stream, to obtain a first channel encoding code word; and
the processing module is specifically configured to process the first channel encoding code word by using the encoding neural network, to obtain the first symbol stream.

In some optional embodiments of this application,

the processing module is specifically configured to process the first channel encoding code word by using the encoding neural network, to obtain a first intermediate symbol; and
the processing module is specifically configured to perform filtering processing on the first intermediate symbol by using a filtering neural network, to obtain the first symbol stream, where intersymbol interference is introduced into the first symbol stream.

In some optional embodiments of this application,

the processing module is specifically configured to perform upsampling processing on the first intermediate symbol, to obtain a second intermediate symbol; and
the processing module is specifically configured to perform filtering processing on the second intermediate symbol by using the filtering neural network, to obtain the first symbol stream.

According to a fourth aspect, an embodiment of this application proposes a communication apparatus, including:

a transceiver module, configured to obtain a first data stream, where
the transceiver module is further configured to receive a first symbol stream, where the first symbol stream is from a transmit end, the first symbol stream is obtained by the transmit end by processing the first data stream by using an encoding neural network, the encoding neural network includes a first neural network, and the first neural network reuses a part or all of a decoding neural network and/or a parameter of a part or all of the decoding neural network; and
a processing module, configured to process the first symbol stream by using the decoding neural network, to obtain a second data stream, where
the processing module is further configured to train the decoding neural network based on the first data stream and the second data stream.

In some optional embodiments of this application,

the processing module is specifically configured to process the first data stream and the second data stream by using the decoding neural network, to obtain a first function, where the first function is a loss function and/or a reward function;
the processing module is specifically configured to process the first function by using the decoding neural network, to obtain a first gradient; and
the processing module is specifically configured to train the decoding neural network by using the first gradient.

In some optional embodiments of this application,
the transceiver module is further configured to send the first gradient to the transmit end, where the first gradient is used to train the first neural network in the encoding neural network.

In some optional embodiments of this application,

the processing module is further configured to generate a first weight by using the decoding neural network, where the first weight is a weight of the decoding neural network; and

the processing module is further configured to send the first weight to the transmit end, where the first weight is used to train the first neural network in the encoding neural network.

In some optional embodiments of this application,

the processing module is further configured to process the first data stream and the second data stream by using the decoding neural network, to obtain a second function, where the second function is a loss function and/or a reward function; and

the transceiver module is further configured to send the second function to the transmit end, where the second function is used to train the encoding neural network.

In some optional embodiments of this application,

the transceiver module is specifically configured to receive a first waveform signal, where the first waveform signal is obtained by the transmit end by performing filtering processing on the first symbol stream;

the processing module is specifically configured to perform quantization processing on the first waveform signal, to obtain a quantized symbol sequence, where one group of the first data streams is mapped to one or more of the quantized symbol sequences, bit flipping exists at most once in each symbol of the quantized symbol sequence, and the bit flipping is 0 to 1 or 1 to 0; and

the processing module is specifically configured to process a first sequence in the quantized symbol sequence by using the decoding neural network, to obtain the second data stream.

In some optional embodiments of this application,

the transceiver module is specifically configured to receive the first waveform signal interfered by a first channel, where the first channel is a channel between the receive end and the transmit end; and

the processing module is specifically configured to perform quantization processing on the first waveform signal interfered by the first channel, to obtain the quantized symbol sequence.

In some optional embodiments of this application,

the processing module is specifically configured to process the first waveform signal by using the decoding neural network, to obtain a first channel decoding code word or a log-likelihood ratio; and

the processing module is specifically configured to process the first channel decoding code word or the log-likelihood ratio, to obtain the second data stream.

In some optional embodiments of this application,

the processing module is specifically configured to perform quantization processing on the first waveform signal, to obtain the quantized symbol sequence; and

the processing module is specifically configured to process the first sequence in the quantized symbol sequence by using the decoding neural network, to obtain the first channel decoding code word or the log-likelihood ratio.

In some optional embodiments of this application,

when the first symbol stream includes x symbol groups, and each of the symbol groups includes n symbols, the first waveform signal includes x symbol groups, where x is a positive integer greater than or equal to 1, and n is a positive integer greater than or equal to 1; and

the processing module performs quantization processing on n symbols in the first waveform signal, to obtain the quantized symbol sequence, a length of the quantized symbol sequence is nM, and a length of the first sequence in the quantized symbol sequence is [(n - 1)M + 1, nM], where M is an oversampling rate of the receive end.

In some optional embodiments of this application,

the processing module is specifically configured to perform filtering processing on the first waveform signal, to obtain a second waveform signal; and

the processing module is specifically configured to perform quantization processing on the second waveform signal, to obtain the quantized symbol sequence.

According to a fifth aspect, an embodiment of this application proposes a communication apparatus, including:

a transceiver, configured to obtain a first data stream; and

a processor, configured to process the first data stream by using an encoding neural network, to obtain a first symbol stream, where the encoding neural network includes a first neural network, and the first neural network reuses a part or all of a decoding neural network and/or a parameter of a part or all of the decoding neural network, where the transceiver is further configured to output the first symbol stream.

In some optional embodiments of this application,

the transceiver is further configured to receive a first weight, where the first weight is from the decoding neural network, and the first weight is used to train the first neural network.

In some optional embodiments of this application,

the transceiver is further configured to receive a first gradient, where the first gradient is from the decoding neural network, and the first gradient is used to train the first neural network.

In some optional embodiments of this application,

the transceiver is further configured to receive a second function, where the second function is from the decoding neural network, and the second function is a loss function and/or a reward function; and

the transceiver is further configured to process the second function by using the encoding neural network, to obtain a second gradient, where the second gradient is used to train the encoding neural network.

In some optional embodiments of this application,

the processor is specifically configured to perform filtering processing on the first symbol stream, to obtain a first waveform signal, where an out-of-band signal is filtered out from the first waveform signal; and

the transceiver is specifically configured to output the first waveform signal.

In some optional embodiments of this application,

the processor is specifically configured to perform encoding processing on the first data stream, to obtain a first channel encoding code word; and

the processor is specifically configured to process the first channel encoding code word by using the encoding neural network, to obtain the first symbol stream.

In some optional embodiments of this application,

the processor is specifically configured to process the first channel encoding code word by using the encoding neural network, to obtain a first intermediate symbol; and

the processor is specifically configured to perform filtering processing on the first intermediate symbol by using a filtering neural network, to obtain the first symbol stream, where intersymbol interference is introduced into the first symbol stream.

In some optional embodiments of this application,

the processor is specifically configured to perform upsampling processing on the first intermediate symbol, to obtain a second intermediate symbol; and

the processor is specifically configured to perform filtering processing on the second intermediate symbol by using the filtering neural network, to obtain the first symbol stream.

According to a sixth aspect, an embodiment of this application proposes a communication apparatus, including:

a transceiver, configured to obtain a first data stream, where

the transceiver is further configured to receive a first symbol stream, where the first symbol stream is from a transmit end, the first symbol stream is obtained by the transmit end by processing the first data stream by using an encoding neural network, the encoding neural network includes a first neural network, and the first neural network reuses a part or all of a decoding neural network and/or a parameter of a part or all of the decoding neural network; and a processor, configured to process the first symbol stream by using the decoding neural network, to obtain a second data stream, where the processor is further configured to train the decoding neural network based on the first data stream and the second data stream.

In some optional embodiments of this application,

the processor is specifically configured to process the first data stream and the second data stream by using the decoding neural network, to obtain a first function, where the first function is a loss function and/or a reward function; the processor is specifically configured to process the first function by using the decoding neural network, to obtain a first gradient; and the processor is specifically configured to train the decoding neural network by using the first gradient.

In some optional embodiments of this application, the transceiver is further configured to send the first gradient to the transmit end, where the first gradient is used to train the first neural network in the encoding neural network.

In some optional embodiments of this application,

the processor is further configured to generate a first weight by using the decoding neural network, where the first weight is a weight of the decoding neural network; and the processor is further configured to send the first weight to the transmit end, where the first weight is used to train the first neural network in the encoding neural network.

In some optional embodiments of this application,

the processor is further configured to process the first data stream and the second data stream by using the decoding neural network, to obtain a second function, where the second function is a loss function and/or a reward function; and the transceiver is further configured to send the second function to the transmit end, where the second function is used to train the encoding neural network.

In some optional embodiments of this application,

the transceiver is specifically configured to receive a first waveform signal, where the first waveform signal is obtained by the transmit end by performing filtering processing on the first symbol stream; the processor is specifically configured to perform quantization processing on the first waveform signal, to obtain a quantized symbol sequence, where one group of the first data streams is mapped to one or more of the quantized symbol sequences, bit flipping exists at most once in each symbol of the quantized symbol sequence, and the bit flipping is 0 to 1 or 1 to 0; and the processor is specifically configured to process a first sequence in the quantized symbol sequence by using the decoding neural network, to obtain the second data stream.

In some optional embodiments of this application,

the transceiver is specifically configured to receive the first waveform signal interfered by a first channel, where the first channel is a channel between the receive end and the transmit end; and the processor is specifically configured to perform quantization processing on the first waveform signal interfered by the first channel, to obtain the quantized symbol sequence.

In some optional embodiments of this application,

the processor is specifically configured to process the first waveform signal by using the decoding neural network, to obtain a first channel decoding code word or a log-likelihood ratio; and the processor is specifically configured to process the first channel decoding code word or the log-likelihood ratio, to obtain the second data stream.

In some optional embodiments of this application,

the processor is specifically configured to perform quantization processing on the first waveform signal, to obtain the quantized symbol sequence; and
the processor is specifically configured to process the first sequence in the quantized symbol sequence by using the decoding neural network, to obtain the first channel decoding code word or the log-likelihood ratio.

In some optional embodiments of this application,

the processor is specifically configured to: when the first symbol stream includes x symbol groups, and each of the symbol groups includes n symbols, the first waveform signal includes x symbol groups, where x is a positive integer greater than or equal to 1, and n is a positive integer greater than or equal to 1; and
the processor performs quantization processing on n symbols in the first waveform signal, to obtain the quantized symbol sequence, a length of the quantized symbol sequence is nM, and a length of the first sequence in the quantized symbol sequence is [(n - 1)M + 1, nM], where M is an oversampling rate of the receive end.

In some optional embodiments of this application,

the processor is specifically configured to perform filtering processing on the first waveform signal, to obtain a second waveform signal; and
the processor is specifically configured to perform quantization processing on the second waveform signal, to obtain the quantized symbol sequence.

According to a seventh aspect, an embodiment of this application provides a communication apparatus. The communication apparatus may implement functions performed by the transmit end or the receive end in the method in the first aspect or the second aspect. The communication apparatus includes a processor, a memory, a receiver connected to the processor, and a transmitter connected to the processor. The memory is configured to store program code, and transmit the program code to the processor. The processor is configured to drive, according to instructions in the program code, the receiver and the transmitter to perform the method in the first aspect or the second aspect. The receiver and the transmitter are separately connected to the processor, to perform operations of the communication apparatus in the method according to the foregoing aspects. Specifically, the transmitter may perform a sending operation, and the receiver may perform a receiving operation. Optionally, the receiver and the transmitter may be radio frequency circuits, and the radio frequency circuit receives and sends a message by using an antenna. Alternatively, the receiver and the transmitter may be a communication interface, the processor is connected to the communication interface by using a bus, and the processor receives or sends a message by using the communication interface.

According to an eighth aspect, an embodiment of this application provides a communication apparatus. The communication apparatus may include an entity such as a network device, a terminal device, or a chip. The communication apparatus includes a processor and a memory. The memory is configured to store instructions. The processor is configured to execute the instruction in the memory, so that the communication apparatus performs the method according to any one of the first aspect or the second aspect.

According to a ninth aspect, an embodiment of this application provides a computer-readable storage medium storing one or more computer-executable instructions. When the computer-executable instruction is executed by a processor, the processor performs any one of the possible implementations according to the first aspect or the second aspect.

According to a tenth aspect, an embodiment of this application provides a computer program product (or referred to as a computer program) storing one or more computer-executable instructions. When the computer-executable instruction is executed by the processor, the processor performs any one of the possible implementations according to the first aspect or the second aspect.

According to an eleventh aspect, this application provides a chip system. The chip system includes a processor, configured to support a computer device in implementing functions in the foregoing aspects. In a possible design, the chip system further includes a memory. The memory is configured to store program instructions and data that are necessary for the computer device. The chip system may include a chip, or may include a chip and another discrete device.

According to a twelfth aspect, this application provides a communication system. The communication system includes the communication apparatus according to the fifth aspect or the sixth aspect.

**BRIEF DESCRIPTION OF DRAWINGS**

FIG. 1 is a schematic block diagram of a neural network 100 according to an embodiment of this application;

FIG. 2 is a schematic diagram of optimization of a loss function according to an embodiment of this application;

FIG. 3 is a schematic diagram of gradient back propagation according to an embodiment of this application;

FIG. 4 is a schematic diagram of reinforcement learning;

FIG. 5 is a schematic diagram of a structure of a self-encoder according to an embodiment of this application;

FIG. 6a is a schematic diagram of an application scenario according to an embodiment of this application;

FIG. 6b is a schematic diagram of another application scenario according to an embodiment of this application;

FIG. 7 is a schematic diagram of a hardware structure of a communication apparatus according to an embodiment of this application;

FIG. 8 is a schematic diagram of an embodiment of a neural network-based communication method according to an embodiment of this application;

FIG. 9 is a schematic diagram of a structure of a communication system according to an embodiment of this application;

FIG. 10 is a schematic diagram of a structure of another communication system according to an embodiment of this application;

FIG. 11 is a schematic diagram of a structure of an encoding neural network and a decoding neural network according to an embodiment of this application;

FIG. 12 is a schematic flowchart of an application scenario according to an embodiment of this application;

FIG. 13 is a schematic diagram of a frame structure according to an embodiment of this application;

FIG. 14 is a schematic diagram of a simulation experiment according to an embodiment of this application;

FIG. 15 is a schematic diagram of another embodiment of a neural network-based communication method according to an embodiment of this application;

FIG. 16a is a schematic diagram of a structure of still another communication system according to an embodiment of this application;

FIG. 16b is a schematic diagram of a principle of an oversampling-based 1 bit communication system according to an embodiment of this application;

FIG. 16c is another schematic diagram of a principle of an oversampling-based 1 bit communication system according to an embodiment of this application;

FIG. 17 is a schematic diagram of an iterative receiving structure according to an embodiment of this application;

FIG. 18 is a symbol mapping diagram according to an embodiment of this application;

FIG. 19 is a symbol mapping diagram according to an embodiment of this application;

FIG. 20 is a schematic diagram of another simulation experiment according to an embodiment of this application;

FIG. 21 is a schematic diagram of still another simulation experiment according to an embodiment of this application;

FIG. 22 is a schematic diagram of a structure of yet another communication system according to an embodiment of this application;

FIG. 23 is a schematic diagram of yet another simulation experiment according to an embodiment of this application;

FIG. 24 is a schematic diagram of still yet another simulation experiment according to an embodiment of this application;

FIG. 25 is a schematic diagram of an embodiment of a communication apparatus according to an embodiment of this application; and

FIG. 26 is a schematic diagram of an embodiment of a communication apparatus according to an embodiment of this application.

## DESCRIPTION OF EMBODIMENTS

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

The following clearly describes technical solutions in embodiments of this application with reference to the accompanying drawings in embodiments of this application. In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and " a plurality of items" means two or more items. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

For ease of understanding this solution, a neural network is first described. It should be understood that a neural network (also referred to as a neural network model) is a network model that simulates behavior features of an animal neural network. This network model, depending on a complexity of the network model, adjusts an interconnecting relationship among a large quantity of internal nodes, to process information.

A process of training a neural network is a process of learning a weight corresponding to a neuron, and a final objective of the process is to obtain a weight corresponding to a neuron at each layer of a trained neural network.

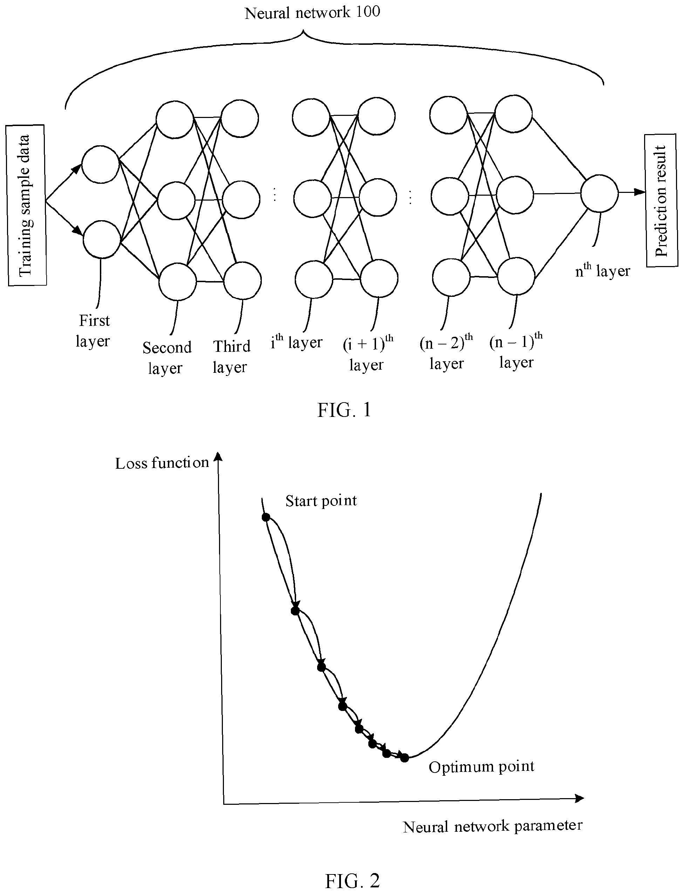

With reference to FIG. 1, the following uses an example to describe a training procedure of the neural network (including an encoding neural network, a decoding neural network, and a filtering neural network) in an embodiment of this application. It should be noted that FIG. 1 and related descriptions of FIG. 1 do not constitute a limitation on an actual training procedure.

FIG. 1 is a schematic block diagram of a neural network 100 according to an embodiment of this application. The neural network 100 includes n layers of neurons, each of the n layers of neurons includes one or more neurons, and all neurons at each layer are connected to all neurons at a next layer. The neural network 100 in FIG. 1 is used as an example for description. Refer to FIG. 1. A first layer includes two neurons, each layer from a second layer to an (n - 1)$^{th}$ layer includes three neurons, and an n$^{th}$ layer includes one neuron, where n is a positive integer not less than 2, and i in FIG. 1 is a positive integer not greater than n and not less than 1. Each neuron has a corresponding weight.

The following describes one iteration in a training process of the neural network 100 in detail.

Training data is obtained from a training data set, and the training data is used as an input of the first layer of the neural network 100. After the input of the first layer passes through a plurality of neurons from the first layer to the n$^{th}$ layer, a prediction result is output from the n$^{th}$ layer. Specifically, each layer of neurons has corresponding weights. The training data is input into the first layer of neurons, and the first layer of neurons outputs an output value of the first layer of neurons based on the corresponding weights. The output value of the first layer of neurons is used as an input of the second layer of neurons, and the second layer of neurons outputs an output value of the second layer of neurons based on corresponding weights. Similarly, the rest may be deduced by analogy, and a prediction result is finally output from the n$^{th}$ layer

The first layer is also referred to as an input layer, the n$^{th}$ layer is also referred to as an output layer, and the second layer to the (n - 1)$^{th}$ layer in the middle are also referred to as hidden layers.

In the process of training the neural network 100, it is expected that the prediction result output from the n$^{th}$ layer of the neural network 100 is as close as possible to prior knowledge (prior knowledge) of the training data. The prior knowledge is also referred to as a ground truth (ground truth), and usually includes a ground result corresponding to training data provided by a person. Therefore, by comparing a current prediction result and the prior knowledge, weights corresponding to each layer of neurons in the neural network 100 may be updated based on a difference between the current prediction result and the prior knowledge (certainly, before a first update, there is usually an initialization process, in other words, the weights corresponding to each layer of neurons in the neural network 100 are initialized). Therefore, after the prediction result output from the n$^{th}$ layer is obtained, an error algorithm is used to correct, based on the prediction result and the prior knowledge, the weight corresponding to the neuron. Details are as follows:

work of each layer in the neural network may be described by using the following mathematical expressions:

$$\mathbf{h} = f(\mathbf{wx} + \mathbf{b}),$$

where

h is an output of the neuron, w is a weight matrix, b is a bias vector, and f is an activation function. In this case, an output of the neural network may be recursively expressed as follows:

$$\mathbf{y} = \mathbf{f_n}(\mathbf{w_n f_{n-1}}(...) + \mathbf{b_n}).$$

Briefly, the neural network may be understood as a mapping relationship from an input data set to an output data set. Generally, the neural network is initialized at random. A process of obtaining the mapping relationship from random w and b by using existing data is referred to as training of the neural network. A specific training manner is to evaluate an output result of the neural network by using a loss function (loss function), and back-propagate an error, so that w and b can be iteratively optimized by using a gradient descent method until the loss function reaches a minimum value. For example, refer to FIG. 2. FIG. 2 is a schematic diagram of optimization of a loss function according to an embodiment of this application.

A gradient descent process may be expressed as follows:

$$\theta \leftarrow \theta - \eta \frac{\partial L}{\partial \theta},$$

where

θ is a to-be-optimized parameter (for example, w and b), L is a loss function, and η is a learning rate that controls a gradient descent step.

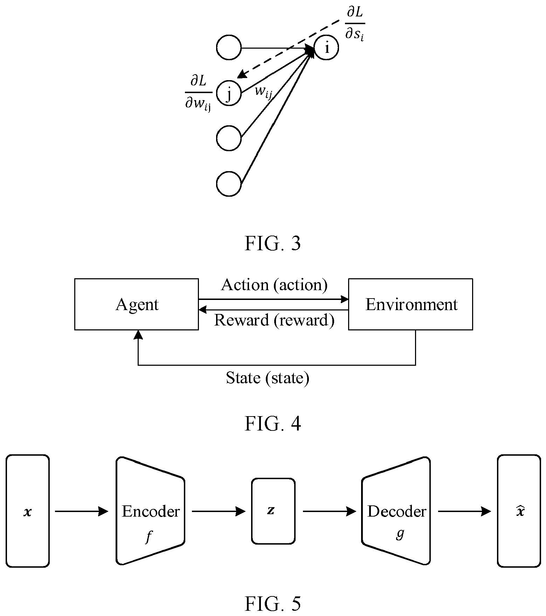

In a process of back propagation, a chain rule of calculating a partial derivative is used, to be specific, a gradient of a parameter of a previous layer can be recursively calculated from a gradient of a parameter of a next layer. For example, refer to FIG. 3. FIG. 3 is a schematic diagram of gradient back propagation according to an embodiment of this application. The gradient back propagation may be expressed by using the following formula:

$$\frac{\partial L}{\partial w_{ij}} = \frac{\partial L}{\partial s_i} \frac{\partial s_i}{\partial w_{ij}},$$

where

$w_{ij}$ is a weight of connecting a node (also referred to as a neuron) j to a node i, and $s_i$ is an input weighted sum on the node i.

Specifically, from a physical level, the work of each layer in the neural network may be understood as completing conversion from input space to output space (that is, from row space to column space of a matrix) by performing five operations on the input space (a set of input vectors). The five operations include: 1. Increasing/decreasing dimension; 2. Zooming in/out; 3. Rotation; 4. Translation; and 5. "Bending". The operations 1, 2, and 3 are performed by W*x, the operation 4 is performed by +b, and the operation 5 is achieved by f(). The word "space" is used herein for expression because a classified object is not a single thing, but a type of things. Space is a collection of all individuals of such type of things. W is a weight vector, and each value in the vector indicates a weight value of one neuron in the neural network at this layer. The vector determines space conversion from the input space to the output space described above. In other words, a weight at each layer controls how to transform space. An objective of training the neural network is to finally obtain a weight matrix of all layers of a trained neural network. Therefore, a training process of the neural network is essentially a manner of learning how to control space conversion, and more specifically, learning a weight matrix. In the following implementations of this application, the weight matrix may be refined into a structure parameter set and a network parameter set.

It is expected that an output of the neural network is as close as possible to a target value. Therefore, after a predicted value and a target value of a current network are compared, a weight vector of each layer of the neural network may be updated based on a difference between the predicted value and the target value (certainly, before a first update, there is usually an initialization process, in other words, preconfiguring a parameter for each layer of the neural network). For example, if the predicted value of the network is excessively high, a value of a weight in a weight matrix is adjusted constantly to reduce the predicted value until the value output from the neural network is close to or equal to the target value. Therefore, "how to compare the difference between the predicted value and the target value" needs to be predefined. This is a loss function (loss function) or an objective function (objective function). The loss function is an important equation that measures the difference between the predicted value and the target value. The loss function is used as an example. A higher loss (loss) of the loss function indicates a larger difference, and training of the neural network may be understood as a process of reducing the loss as much as possible.

The loss function is calculated based on the prediction result and the prior knowledge. A weight corresponding to each layer of neurons in the neural network 100 is corrected based on the loss function in a direction from the $n^{th}$ layer to the first layer. The weight may be corrected by calculating a gradient corresponding to each weight, where the gradient is obtained according to the loss function, and the gradient may be obtained by calculating a derivative of the weight according to the loss function.

Correcting the weight based on the prediction result and the prior knowledge includes: calculating the loss function based on the prediction result and the prior knowledge, and calculating, based on the loss function in a direction from the $n^{th}$ layer to the first layer, a gradient of a weight corresponding to each layer of neurons. In other words, the gradient of the weight corresponding to each layer of neurons is calculated layer by layer in an order from the $n^{th}$ layer to the first layer. After a gradient of a weight corresponding to an $i^{th}$ layer of neurons is calculated, a gradient of a weight corresponding to an $(i - 1)^{th}$ layer of neurons is calculated. After the gradient of the weight corresponding to each layer of neurons is obtained, the weight corresponding to each layer of neurons is corrected based on each gradient, to complete one iteration.

In a process of a plurality of iterations, the weight corresponding to each layer of neurons is continuously corrected, so that the prediction result output from the neural network 100 is as close as possible to the prior knowledge of the training data.

The following describes some concepts in an artificial intelligence (Artificial Intelligence, AI) field in embodiments of this application.

(1) Reinforcement learning.

Refer to FIG. 4. FIG. 4 is a schematic diagram of reinforcement learning. The reinforcement learning means that an agent (Agent) learns by interacting with an environment (Environment). The agent performs an action (action) on the environment based on a state (state) fed back from the environment, to obtain a reward (reward) and a state at a next moment. An objective of the reinforcement learning is to enable the agent to accumulate a maximum reward over a period of time. Different from supervised learning, the reinforcement learning is mainly manifested in that there is no need for a training set. In the reinforcement learning, a reinforcement signal provided in the environment evaluates quality of a generated action (usually a scalar signal), rather than telling a reinforcement learning system how to generate a correct action. Because an external environment provides little information, the agent needs to learn from its own experience. In this way, the agent gains knowledge in an action-evaluation environment and improve action plans to adapt to the environment. Common reinforcement learning algorithms include Q learning (Q-learning), a policy gradient (policy gradient), " actor-critic", and the like. Currently, a commonly used reinforcement learning algorithm is deep reinforcement learning. It combines the reinforcement learning with deep learning and uses a neural network to model policies and value functions to adapt to a larger input/output dimension, which is referred to as deep reinforcement learning (deep reinforcement learning, DRL).

(2) Supervised learning.

The supervised learning is the most widely studied/applied technology. An objective of the supervised learning is to give a training set (including a plurality of pairs of input data and tags), and learn a mapping relationship between an input (data) and an output (label). In addition, it is expected that the mapping relationship can also be applied to data outside the training set. The training set is a set of correct input and output pairs.

(3) Self-encoder.

Refer to FIG. 5. FIG. 5 is a schematic diagram of a structure of a self-encoder according to an embodiment of this application. The self-encoder belongs to unsupervised learning, which is specifically as follows: An encoder (encoder) maps (or compresses) input data x to a variable in a latent space (latent space) by using a f function. A decoder (decoder) recovers original data $\hat{x}$ from the variable z in the latent space by using a g function. The f function and the g function may be implemented by using a neural network, and an optimization objective of the self-encoder may be to search for parameters of the f function and the g function, so as to minimize an error of recovered data. A task finished by the encoder may also be considered as a supervised learning process in which a label is known (generally input data, for example, bit data of 0 or 1).

Generally, a task performed in a communication system is very similar to that performed by the self-encoder. The entire communication system may be similar to a limited self-encoder, where a transmit end is an encoder, and a receive end is a decoder. In a wireless communication system, an impact generated by a channel may be superimposed in the latent space. The variable of the latent space is a waveform signal sent by the transmit end.

In the conventional technology, when the communication system deploys the self-encoder, the self-encoder usually establishes a simulation environment for training. The details are as follows: First, neural networks involved in the self-encoder are trained in the simulation environment, and each neural network has mathematical modeling and is independently optimized. Second, transfer learning (transfer learning) is used to transfer the neural network to an actual environment.

However, in an actual application scenario, the channel, the transmit end, and the receive end have non-idealization and nonlinear problems, in other words, a mathematical model is different from an actual scenario. Therefore, a mathematical model mismatch is caused, and an optimized neural network does not match the actual scenario, thereby affecting performance of the wireless communication system in which the neural network is deployed.

Based on this, an embodiment of this application provides a neural network-based communication method. A first neural network in an encoding neural network reuses a decoding neural network and a parameter of the decoding neural network. In this way, the decoding neural network provides a part of prior information for the encoding neural network, so that the encoding neural network can more accurately predict a benefit of an action, thereby reducing a variance of gradient estimation, accelerating a network convergence speed, and improving convergence performance.

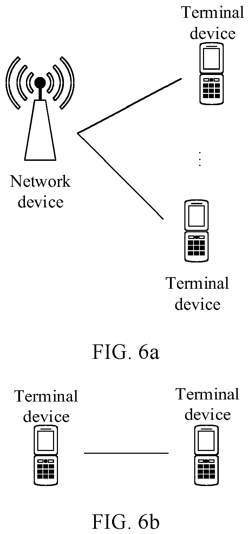

First, some application scenarios of this solution are described. Refer to FIG. 6a. FIG. 6a is a schematic diagram of an application scenario according to an embodiment of this application. In an optional implementation, the transmit end in this embodiment of this application may be a network device, and the receive end may be a terminal device. In another optional implementation, the transmit end in this embodiment of this application may be a terminal device, and the receive end may be a network device.

Refer to FIG. 6b. FIG. 6b is a schematic diagram of another application scenario according to an embodiment of this application. In another optional implementation, the transmit end in this embodiment of this application may be a terminal device, and the receive end may be another terminal device that establishes a communication connection to the transmit end.

In this embodiment of this application, the terminal device may also be referred to as user equipment (user equipment, UE). The terminal device in this embodiment of this application is a device having a radio transceiver function, and may communicate with one or more core networks (core network, CN) by using an access network device in a network device. The terminal device may also be referred to as an access terminal, a terminal, a subscriber unit, a subscriber station, a mobile station, a remote station, a remote terminal, a mobile device, a user terminal, a wireless network device, a user agent, a user apparatus, or the like. The terminal device may be deployed on land, and includes an indoor or outdoor device, a handheld device, or a vehicle-mounted device. The terminal device may be deployed on water (for example, on a ship), or may be deployed in air (for example, on aircraft, a balloon, or a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an unmanned aerial vehicle device, a terminal in an Internet of Things, a terminal in an Internet of Vehicles, a terminal in any form in a fifth generation (fifth generation, 5G) network and a future network, relay user equipment, a terminal in a future evolved public land mobile network (public land mobile network, PLMN), or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. This is not limited in embodiments of this application.

The network device may be considered as a sub-network of an operator network, and is an implementation system between a service node and the terminal device in the operator network. To access the operator network, the terminal device first passes through the network device, and then may be connected to the service node of the operator network through the network device. The network device in this embodiment of this application is a device that provides a wireless communication function for the terminal device, and may also be referred to as a (radio) access network ((radio) access network, (R)AN). The network device includes but is not limited to: a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a pico (pico), a mobile switching center, or a network device in a future network. In systems using different radio access technologies, devices with functions of the access network device may have different names.

The neural network-based communication method provided in this application may be applied to various communication systems, for example, may be an Internet of Things (Internet of Things, IoT), a narrow band Internet of Things (narrow band Internet of Things, NB-IoT), long term evolution (long term evolution, LTE), or may be a 5G (5G) communication system, or may also be a hybrid architecture of LTE and 5G, a 5G new radio (new radio, NR) system, or a new communication system emerging in future communication development. The 5G communication system described in this application may include at least one of a non-standalone (non-standalone, NSA) 5G communication system or a standalone (standalone, SA) 5G communication system. Alternatively, the communication system may be a public land mobile network (public land mobile network, PLMN) network, a device-to-device (device-to-device, D2D) network, a machine to machine (machine to machine, M2M) network, or another network.

In addition, embodiments of this application are also applicable to another future-oriented communication technology, for example, 6G. Network architectures and service scenarios described in this application are intended to describe the technical solutions in this application more clearly, and do not constitute a limitation on the technical solutions provided in this application. Persons of ordinary skill in the art may know that: With evolution of network architectures and emergence of new service scenarios, the technical solutions provided in this application are also applicable to similar technical problems.

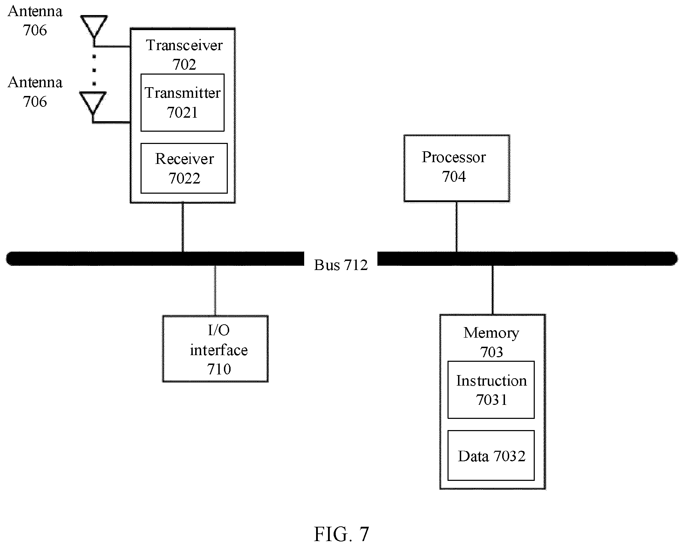

FIG. 7 is a schematic diagram of a hardware structure of a communication apparatus according to an embodiment of this application. The communication apparatus may be a possible implementation of the network device or the terminal device in this embodiment of this application. As shown in FIG. 7, the communication apparatus includes at least a processor 704, a memory 703, and a transceiver 702. The memory 703 is further configured to store an instruction 7031 and data 7032. Optionally, the communication apparatus may further include an antenna 706, an I/O (input/output, Input/Output) interface 710, and a bus 712. The transceiver 702 further includes a transmitter 7021 and a receiver 7022. In addition, the processor 704, the transceiver 702, the memory 703, and the I/O interface 710 are communicatively connected to each other by using the bus 712. The antenna 706 is connected to the transceiver 702.

The processor 704 may be a general-purpose processor, for example, but not limited to a central processing unit (Central Processing Unit, CPU), or may be a dedicated processor, for example, but not limited to a digital signal processor (Digital Signal Processor, DSP), an application-specific integrated circuit (Application-Specific Integrated Circuit, ASIC), and a field programmable gate array (Field Programmable Gate Array, FPGA). Alternatively, the processor 704 may be a neural-network processing unit (neural-network processing unit, NPU). In addition, the processor 704 may alternatively be a combination of a plurality of processors. Particularly, in the technical solution provided in this embodiment of this application, the processor 704 may be configured to perform related steps of the neural network-based communication method in a subsequent method embodiment. The processor 704 may be a processor specifically designed to perform the foregoing steps and/or operations, or may be a processor that performs the foregoing steps and/or operations by reading and executing the instruction 7031 stored in the memory 703. The processor 704 may need to use data 7032 in a process of performing the foregoing steps and/or operations.

The transceiver 702 includes a transmitter 7021 and a receiver 7022. In an optional implementation, the transmitter 7021 is configured to send a signal by using the antenna 706. The receiver 7022 is configured to receive a signal by using at least one of the antennas 706. Particularly, in the technical solution provided in this embodiment of this application, the transmitter 7021 may be specifically configured to perform an operation by using at least one of the antennas 706, for example, an operation performed by a receiving module or a sending module in the network device or the terminal device when a neural network-based communication method in a subsequent method embodiment is applied to the network device or the terminal device.

In this embodiment of this application, the transceiver 702 is configured to support the communication apparatus in performing the foregoing receiving function and sending function. A processor having a processing function is considered as the processor 704. The receiver 7022 may also be referred to as an input port, a receiving circuit, or the like. The transmitter 7021 may be referred to as a transmitter, a transmitting circuit, or the like.

The processor 704 may be configured to execute the instruction stored in the memory 703, to control the transceiver 702 to receive a message and/or send a message, to realize a function of the communication apparatus in the method embodiment of this application. In an implementation, it may be considered that a function of the transceiver 702 is implemented by using a transceiver circuit or a dedicated transceiver chip. In this embodiment of this application, that the transceiver 702 receives a message may be understood as that the transceiver 702 inputs a message, and that the transceiver 702 sends a message may be understood as that the transceiver 702 outputs a message.

The memory 703 may be various types of storage media, for example, a random access memory (Random Access Memory, RAM), a read only memory (Read Only Memory, ROM), a non-volatile RAM (Non-Volatile RAM, NVRAM), a programmable ROM (Programmable ROM, PROM), an erasable PROM (Erasable PROM, EPROM), an electrically erasable PROM (Electrically Erasable PROM, EEPROM), a flash memory, an optical memory, and a register. The memory 703 is specifically configured to store the instruction 7031 and the data 7032. The processor 704 may perform the steps and/or the operations in the method embodiments of this application by reading and executing the instruction 7031 stored in the memory 703. The data 7032 may need to be used in a process of performing the operations and/or the steps in the method embodiment of this application.

Optionally, the communication apparatus may further include an I/O interface 710. The I/O interface 710 is configured to receive instructions and/or data from a peripheral device, and output instructions and/or data to the peripheral device.

The method provided in embodiments of this application is described below. For ease of description, a neural network-based communication method provided in this embodiment of this application may be divided into: 1. Training part; 2. Communication part.

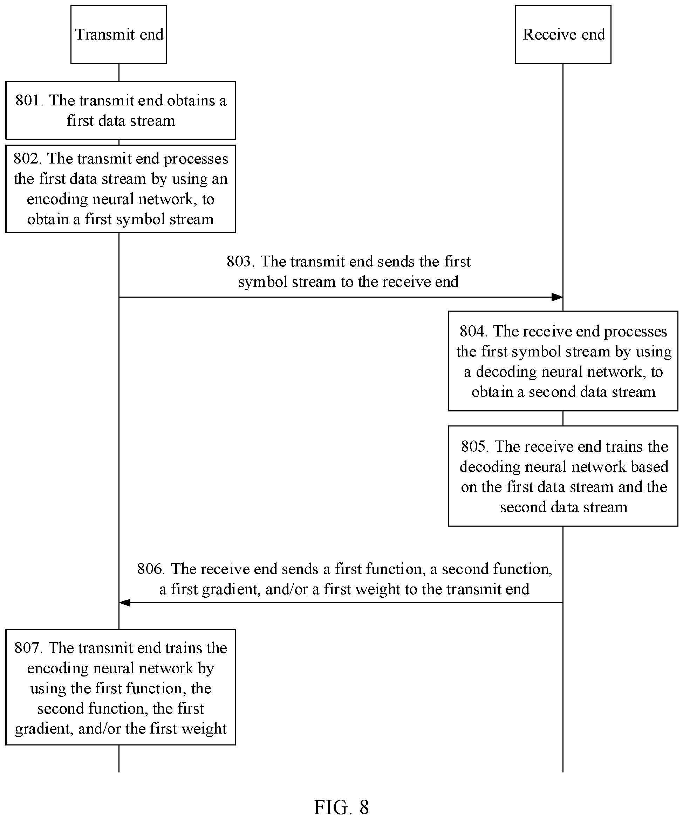

First, the training part is described with reference to the accompanying drawings. Refer to FIG. 8. FIG. 8 is a schematic diagram of an embodiment of a neural network-based communication method according to an embodiment of this application. The neural network-based communication method provided in this embodiment of this application includes the following steps.

801. A transmit end obtains a first data stream.

In this embodiment, the transmit end obtains the first data stream, where the first data stream is a binary digit (Binary digit, BIT) stream. When communication interaction is performed between the transmit end and the receive end, the first data stream is normal data sent from the transmit end to the receive end. When neural network training is performed between the transmit end and the receive end, the first data stream is training sample data sent from the transmit end to the receive end.

When the first data stream is the training sample data, the first data stream may be preconfigured inside the transmit end, or the first data stream may be data input externally (relative to the transmit end), or the first data stream may be data negotiated between the transmit end and the receive end. This is not limited herein.

In an optional implementation, when the first data stream is preconfigured inside the transmit end, the first data stream may be further preconfigured inside the receive end.

802. The transmit end processes the first data stream by using an encoding neural network, to obtain a first symbol stream.

In this embodiment, after the transmit end obtains the first data stream, the transmit end processes the first data stream by using the encoding neural network, to obtain the first symbol stream.

Optionally, the transmit end may further perform an operation such as rate matching (Rate matching) and/or modulation on the first symbol stream (or the first data stream). The rate matching (Rate matching) refers to that a bit on a transmission channel is repeated (repeated) or punctured (punctured) to match a bearer capability of a physical channel, and a bit rate required for a transmission format is reached during channel mapping. The modulation mainly implements transfer from a baseband spectrum to a radio frequency band, so as to implement a wireless transmission function.

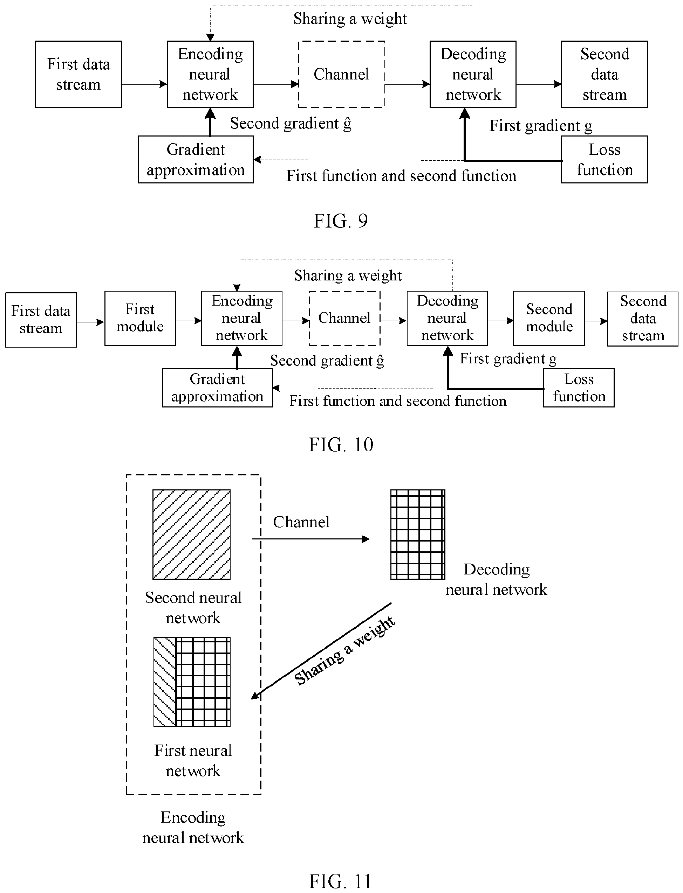

In an optional implementation, the encoding neural network may perform one or more of functions of source encoding, channel encoding, modulation, and/or filtering. For example, refer to FIG. 9. FIG. 9 is a schematic diagram of a structure of a communication system according to an embodiment of this application. In the communication system, a transmit end side is the encoding neural network, a receive end side is a decoding neural network, and another module or component is not shown.

In another optional implementation, related operations such as source encoding, channel encoding, modulation, and/or filtering may be performed by another neural network (relative to the encoding neural network).

In another optional implementation, to avoid a dimension curse (dimension curse) problem (also referred to as a number of dimensions curse problem), related operations such as source encoding, channel encoding, modulation, and/or filtering may be further performed by another module in the transmit end, and the another module is referred to as a first module. The first module may be deployed on an input side of the encoding neural network, or may be deployed on an output side of the encoding neural network, or may be deployed on both the input side and the output side of the encoding neural network.

The dimension curse usually refers to a phenomenon that in a problem involving vector calculation, a calculation amount increases exponentially with the increase of a number of dimensions. For example, refer to FIG. 10. FIG. 10 is a schematic diagram of a structure of another communication system according to an embodiment of this application. In the communication system, a transmit end side is a first module and an encoding neural network, a receive end side is a decoding neural network and a second module, and another module or component is not shown. Specifically, the first module is used to perform related operations such as source encoding, channel encoding, modulation, and/or filtering. First, the first module performs encoding processing on the first data stream, to obtain a first channel encoding code word. Next, the encoding neural network processes the first channel encoding code word, to obtain a first intermediate symbol. Then, an upsampling module performs upsampling processing on the first intermediate symbol, to obtain a second intermediate symbol, where the second intermediate symbol is obtained by performing zero insertion processing on the first intermediate symbol after a sampling point. Then, a filtering neural network at the transmit end performs filtering processing on the second intermediate symbol to obtain the first symbol stream, where the filtering processing performed by the filtering neural network includes introducing intersymbol interference (Intersymbol Interference, ISI).

For example, the encoding neural network includes but is not limited to a fully connected neural network, a radial basis function (Radial basis function, RBF) neural network, a convolutional neural network, a cyclic neural network, a Hopfield neural network, a restricted Boltzmann machine or deep confidence network. The encoding neural network may be any one of the foregoing neural networks, or the encoding neural network may be a combination of the foregoing plurality of neural networks. This is not limited herein.

803. The transmit end sends the first symbol stream to a receive end.

In this embodiment, the transmit end sends the first symbol stream to the receive end through a channel. Compared with a conventional symbol stream sent by the transmit end, the first symbol stream has a characteristic of waveform optimization.

Optionally, filtering processing may be performed, by using a filter inside the transmit end, on the first symbol stream sent from the transmit end to the receive end.

For example, the filtering processing includes introducing intersymbol interference.

For example, the filtering processing further includes filtering out an out-of-band signal, where "out-of-band" in the out-of-band signal refers to a spectrum of a frequency component outside a given operating frequency band.

804. The receive end processes the first symbol stream by using a decoding neural network, to obtain a second data stream.

In this embodiment, specifically, on a transmit end side, the filtering processing is performed on the first symbol stream to obtain a first waveform signal. The transmit end sends the first waveform signal to the receive end through a channel. For ease of description, the channel is referred to as a first channel. The first waveform signal is affected by channel interference in a transmission process of the first channel. In this case, the receive end processes, by using the decoding neural network, the first waveform signal (the first symbol stream) interfered by the first channel, to obtain the second data stream.

In an optional implementation, on the transmit end side, when related operations such as source encoding, channel encoding, modulation, and/or filtering of the first data stream are performed by another module (namely, the first module) in the transmit end, on the receive end side, processing such as source decoding, channel decoding, demodulation, and/or equalization (equalization) may be performed by the decoding neural network, or may be performed by another processing module independent of the decoding neural network. The another processing module is referred to as a second module. The second module may be deployed on an input side of the decoding neural network, or may be deployed on an output side of the decoding neural network, or may be deployed on both the input side and the output side of the decoding neural network. Specifically, the receive end first processes the first waveform signal by using the decoding neural network, to obtain a first channel decoding code word or a log-likelihood ratio (Log-likelihood Ratio, LLR). The log-likelihood ratio is usually used for soft decoding in communication. Second, the receive end processes the first channel decoding code word or the log-likelihood ratio by using the second module, to obtain the second data stream.

For example, the decoding neural network includes but is not limited to a fully connected neural network, a radial basis function neural network, a convolutional neural network, a cyclic neural network, a Hopfield neural network, a restricted Boltzmann machine or deep confidence network. The encoding neural network may be any one of the foregoing neural networks, or the encoding neural network may be a combination of the foregoing plurality of neural networks. This is not limited herein.

It should be noted that the decoding neural network and the encoding neural network may use a same neural network, or may use different neural networks, or may use some same neural networks. This is not limited herein.

805. The receive end trains the decoding neural network based on the first data stream and the second data stream.

In this embodiment, after the receive end obtains the second data stream, the receive end trains the decoding neural network based on the first data stream and the second data stream. Specifically, the receive end first processes the first data stream and the second data stream by using the decoding neural network, to obtain a function value of a first function, where the first function is a loss function and/or a reward function. Second, the receive end processes the function value of the first function by using the decoding neural network, to obtain a first gradient. Then, the receive end trains the decoding neural network by using the first gradient.

In an optional implementation, the first data stream is preconfigured inside the receive end, and the receive end obtains the first data stream inside the receive end.

In another optional implementation, the first data stream is from the transmit end. After the receive end negotiates with the transmit end, the transmit end sends the first data stream to the receive end. Specifically, the first data stream may be sent to the receive end by using a second channel independent of the first channel. The second channel is a channel on which communication has been established between the transmit end and the receive end.

In this embodiment of this application, the first function may be the first function itself, or may be a function value (or a calculation result) of the first function, or may be the first function itself and the function value (or the calculation result) of the first function. This is not limited herein. A second function may be the second function itself, or may be a function value (or a calculation result) of the second function, or may be the second function itself and the function value (or the calculation result) of the second function. This is not limited herein.

806. The receive end sends a first function, a second function, a first gradient, and/or a first weight to the transmit end.

In this embodiment, after the receive end trains the decoding neural network by using the first data stream and the second data stream, the receive end sends the first function, the second function, the first gradient, and/or the first weight to the transmit end.

In this embodiment of this application, the first function and/or the second function for transmitting (sending or receiving) may be implemented in a plurality of manners. For example, the first function is used as an example for description. Transmitting the first function may be transmitting the first function itself, or may be transmitting the function value (or the calculation result) of the first function, or may be transmitting the first function itself and the function value (or the calculation result) of the first function. This is not limited herein.

The following gives detailed description.

First, refer to FIG. 11. FIG. 11 is a schematic diagram of a structure of an encoding neural network and a decoding neural network according to an embodiment of this application. In an optional implementation, the encoding neural network in this embodiment of this application is trained by using an "improved Actor-Critic (Actor-Critic)" algorithm. Based on a function, the encoding neural network may be divided into two parts: a first neural network and a second neural network. The first neural network is also referred to as a "critic neural network", and the second neural network is also referred to as an "actor neural network".

The first neural network may reuse all of the decoding neural network. For example, the first neural network uses all neuron structures of the decoding neural network (the neuron structure includes a quantity of neuron layers).

Alternatively, the first neural network may reuse a part of the decoding neural network (and/or a parameter of a part of the decoding neural network). For example, the first neural network uses a part of a neuron structure of the decoding neural network. A quantity of neuron layers in the first neural network may be consistent with a quantity of neuron layers in the decoding neural network, but only some neurons in the first neural network are consistent with neurons in the decoding neural network.

Alternatively, some neuron layers in the first neural network may be consistent with some neuron layers in the decoding neural network, but a quantity of neuron layers in the first neural network is inconsistent with a quantity of neuron layers in the decoding neural network.

Alternatively, some neurons in the first neural network may use a parameter of some neurons in the decoding neural network, or use a variation of a parameter of some neurons in the decoding neural network.

Alternatively, some neurons in the first neural network may use variations of some neurons in the decoding neural network. This is not limited herein.

It should be noted that "reusing" may indicate that the first neural network uses exactly the same neuron or neuron parameter in the decoding neural network, or the first neural network includes the neuron or the neuron parameter in the decoding neural network, or may indicate that the first neural network uses the variation of the neuron or the variation of the neuron parameter in the decoding neural network, or the like. This is not limited herein.

In an optional implementation, a receive end trains the decoding neural network by using the first data stream and the second data stream. Specifically, the decoding neural network obtains a first function through calculation according to a first data stream and a second data stream, where the first function is a loss function and/or a reward function. The decoding neural network calculates a first gradient based on the first function, where the first gradient is used for further training (for example, updating) of the decoding neural network. Further, the decoding neural network may share a weight of the trained decoding neural network with the encoding neural network. For ease of description, the weight is referred to as a first weight. For example, as shown in FIG. 9, FIG. 10, or FIG. 11, the decoding neural network shares the first weight with the first neural network in the encoding neural network, and the first weight is used to update the first neural network. Optionally, the receive end sends the first weight to a transmit end through a second channel.

In another optional implementation, the receive end processes the first data stream and the second data stream by using the decoding neural network, to obtain a function value of a second function, where the function value of the second function is used to train the encoding neural network (including the first neural network and a second neural network).

For example, as shown in FIG. 9, FIG. 10, or FIG. 11, the decoding neural network sends the first function and/or the second function to the encoding neural network. The first function is used to train (or update) the first neural network. The second function is used to train (or update) the encoding neural network, which refers to training the first neural network, or training the second neural network, or training the first neural network and the second neural network. Optionally, the receive end sends the first function and/or the second function to the transmit end through the second channel.

807. The transmit end trains the encoding neural network by using the first function, the second function, the first gradient, and/or the first weight.

In this embodiment, after the transmit end receives the first function, the second function, the first gradient, and/or the first weight, the transmit end trains the encoding neural network by using the first function, the second function, the first gradient, and/or the first weight. Descriptions are separately provided below.

First, the first function is described. When the transmit end receives the first function, the transmit end performs calculation processing on the first function by using the encoding neural network (for example, the first neural network), to generate a new gradient. The new gradient is used to train (for example, update) the encoding neural network (for example, the first neural network).

Second, the second function is described. When the transmit end receives the second function, the transmit end performs calculation processing on the second function by using the encoding neural network, to generate a second gradient. The second gradient is used to train (for example, update) the encoding neural network. Specifically, the encoding neural network performs calculation processing on the second function by using a gradient estimation (Gradient approximation) algorithm, to generate the second gradient. For example, the gradient approximation algorithm includes but is not limited to a stochastic gradient descent (stochastic gradient descent, SGD) algorithm, an "Adagrad algorithm", a root mean square prop (root mean square prop, RMSProp) algorithm, an adaptive moment estimation (Adaptive moment estimation) algorithm, and a momentum (momentum) algorithm.

Then, the first gradient and/or the first weight are/is described. After the transmit end receives the first gradient and/or the first weight, the transmit end trains the encoding neural network based on the first gradient and/or the first weight. Specifically, the encoding neural network is updated based on the first gradient and/or the first weight.

Optionally, after the training is finished, the transmit end and the receive end may exchange data by using or not using the encoding neural network and the decoding neural network. In this case, the encoding neural network and the decoding neural network are used to exchange data, which is used as an option of a data exchange process between the transmit end and the receive end, and is used for an enhanced waveform.

Optionally, if the second channel remains connected, the training method in this embodiment of this application may be continuously performed. For example, an enhanced waveform in a current channel environment is obtained through training. After the channel environment changes, the training continues to be performed to obtain a new enhanced waveform.

It should be noted that when the transmit end further includes another neural network, for example, a filtering neural network, the filtering neural network is used as a part of the encoding neural network, and is trained by using the foregoing method. Details are not described herein again. When the receive end further includes another neural network, the another neural network is used as a part of the decoding neural network and is trained by using the foregoing method. Details are not described herein again.

It should be noted that the foregoing training-related steps may be performed simultaneously with an actual communication procedure, or may be performed independently of the actual communication procedure.

In this embodiment of this application, joint training optimization is performed on the encoding neural network used by the transmit end and the decoding neural network used by the receive end. The first neural network in the encoding neural network reuses the decoding neural network and the parameter of the decoding neural network. In this way, the decoding neural network provides a part of prior information for the encoding neural network, so that the encoding neural network can more accurately predict a benefit of an action, thereby reducing a variance of gradient estimation, accelerating a network convergence speed, and improving convergence performance.

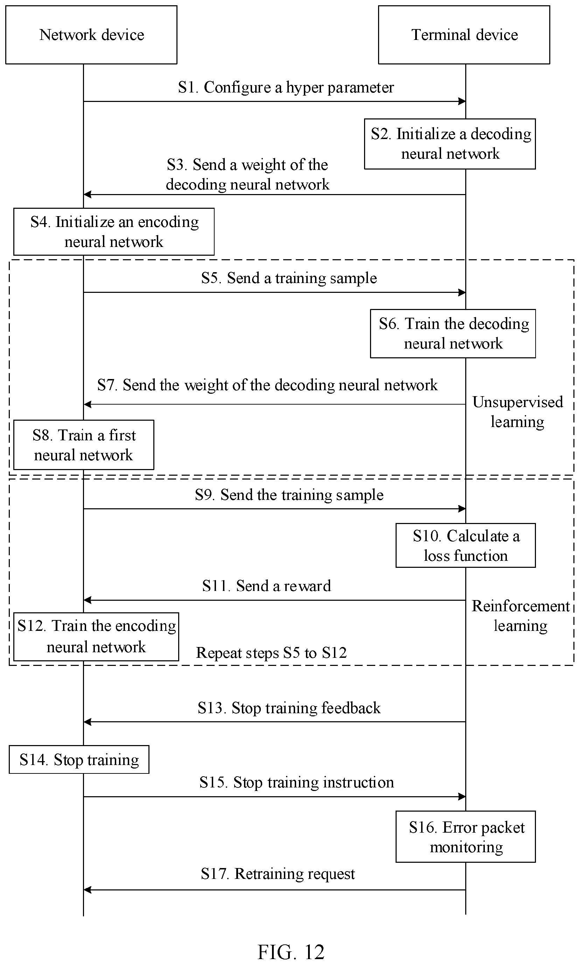

Based on the embodiments shown in FIG. 8 to FIG. 11, refer to FIG. 12. FIG. 12 is a schematic flowchart of an application scenario according to an embodiment of this application. In the application scenario shown in FIG. 12, a transmit end is a network device, and a receive end is a terminal device. It should be noted that FIG. 12 is merely an example for description, and an actual method is not limited. Specifically:

S1. Configure a hyper parameter.

In step S1, the network device (the transmit end) configures a hyper parameter (hyper parameter) for the terminal device. The hyper parameter is also referred to as a hyperparameter. In a context of machine learning, the hyper parameter is a parameter whose value is set before a learning process starts, instead of parameter data obtained through training. Generally, the hyper parameter needs to be optimized, and a group of optimal hyper parameters are selected for a learning machine, so as to improve performance and an effect of learning.

In an optional implementation, the hyper parameter configured in step S1 further includes a training sample, and the training sample is the "first data stream" in the foregoing embodiment.

Specifically, the network device sends a hyper parameter configuration frame to the terminal device. The hyper parameter configuration frame includes one or more of the following parameters: a batch size (batch size), a learning rate (learning rate), a quantity of symbols, a block size, or a configuration parameter of the decoding neural network. The configuration parameter of the decoding neural network includes but is not limited to a neural network type, a quantity of included layers (a quantity of neuron layers), a quantity of neurons at each layer, or an activation function at each layer. The activation function includes but is not limited to: a "sigmoid function", a "tanh function", a "relu function", a "leaky relu function", a "maxout function", and a "softmax function".

Optionally, the hyper parameter configuration frame may further include a training sample, and the training sample is used as a label for training the decoding neural network. The training sample is the "first data stream" in the foregoing embodiment.

S2. Initialize the decoding neural network.

In step S2, the terminal device initializes the decoding neural network based on the hyper parameter configured in step S1.

S3. Send the weight of the decoding neural network.

In step S3, to configure the first neural network in the encoding neural network, the terminal device sends the weight of the decoding neural network to the network device.

S4. Initialize the encoding neural network.

In step S4, the network device initializes the encoding neural network based on the received weight of the decoding neural network. Specifically, the first neural network in the encoding neural network may be initialized.

S5. Send a training sample.

In step S5, the network device sends the training sample to the terminal device.

In an optional implementation, when the hyper parameter configured in step S1 does not include the training sample, the training sample sent in step S5 includes two parts, that is, the "first data stream" and the "second data stream" in the foregoing embodiment. The "first data stream" is sent to the terminal device through a second channel, the second channel is a channel configured between the network device and the terminal device, the second channel may be a preconfigured channel, and data on the second channel may be correctly transmitted. The "second data stream" is sent to the terminal device through a first channel, and the first channel is inconsistent with the second channel.

In another optional implementation, when the hyper parameter configured in step S 1 includes the training sample, the training sample sent in step S5 includes only the "second data stream" in the foregoing embodiment.

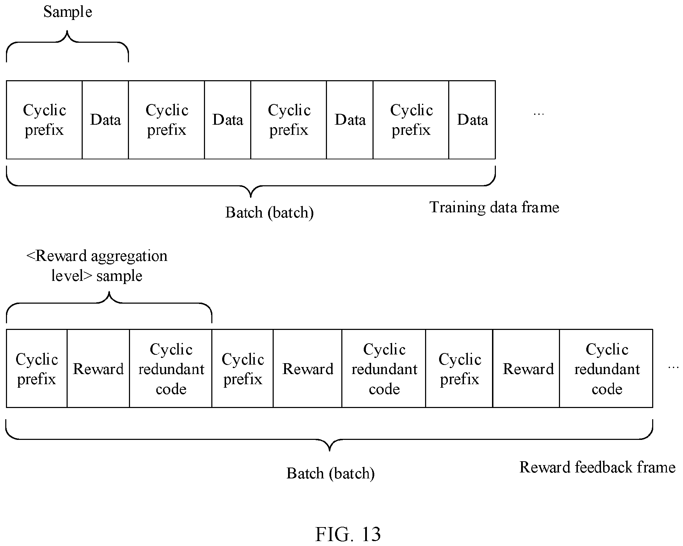

Specifically, the training sample may be sent to the terminal device in a form of a training data frame. For example, refer to FIG. 13. FIG. 13 is a schematic diagram of a frame structure according to an embodiment of this application. One frame of the training data frame includes a batch (batch) of data, and a size of the batch of data is determined by the hyper parameter configuration frame in the foregoing step S1. In the training data frame, each sample (sample) represents a group of training data, and a length of the sample is related to the quantity of symbols and the block size of the hyper parameter configuration frame in the foregoing step S1.

S6. Train the decoding neural network.

In step S6, the terminal device trains the decoding neural network based on the received training sample. A specific training manner is similar to that in the foregoing embodiment, and details are not described herein again.

S7. Send the weight of the decoding neural network.

In step S7, the terminal device sends at least one of the following to the network device: the weight of the decoding neural network, a reward function, a loss function, and/or a gradient that are/is obtained by the decoding neural network, and the like.

Optionally, the weight of the decoding neural network, and the reward function, the loss function, and/or the gradient obtained by the decoding neural network may be sent to the network device (the transmit end) by using a reward feedback frame.

For example, refer to FIG. 13. In the reward feedback frame, a reward aggregation level (Reward aggregation level, RALV) indicates a quantity of samples, and the quantity of samples further indicates a quantity of samples whose rewards are aggregated in a same reward feedback frame for sending. For example, when the reward aggregation level is 1, rewards of one sample are aggregated in a same reward feedback frame for sending; when the reward aggregation level is 2, rewards of two samples are aggregated in a same reward feedback frame for sending; or when the reward aggregation level is 8, rewards of eight samples are aggregated in a same reward feedback frame for sending. The rest may be deduced by analogy, and details are not described herein again.

Optionally, the terminal device sends the weight (the gradient, or the like) of the decoding neural network to the network device by using a gradient/weight sharing frame, and the gradient/weight sharing frame may include the weight of the decoding neural network. The gradient/weight sharing frame may further include quantization precision.

S8. Train the first neural network.

In step S8, the network device trains the first neural network in the encoding neural network based on the weight of the decoding neural network from the terminal device and the like. Specifically, the weight may be used to update the first neural network.

Optionally, in step S7, when the terminal device further sends, to the network device, the reward function, the loss function, and/or the gradient obtained by the decoding neural network, the first neural network is trained (or updated) based on the foregoing data.

The foregoing steps S5 to S8 are also referred to as a related procedure of unsupervised learning of the decoding neural network.

S9. Send a training sample.

In step S9, the network device sends a training sample to the terminal device, where the training sample may be similar to the training sample in step S5. The training sample may also be different from the training sample in step S5. This is not limited herein.

Specifically, similar to the foregoing step S5, the network device may alternatively send the training sample to the terminal device by using the training sample frame.

S10. Calculate a loss function.

In step S10, the decoding neural network calculates the loss function (and/or a reward function) based on the training sample in step S9. For example, the loss function (and/or the reward function) is the " second function" in the foregoing embodiment.

S 11. Send a reward.

In step S11, the terminal device sends the second function to the network device. Specifically, similar to the foregoing step S7, the second function is sent to the network device in the reward feedback frame or the gradient/weight sharing frame.

S12. Train the encoding neural network.

In step S12, the network device trains the encoding neural network based on the second function (or another weight or another gradient) of the decoding neural network from the terminal device.

Optionally, the network device checks the reward feedback frame or the gradient/weight sharing frame from the terminal device. When it is found that a cyclic redundancy check (cyclic redundancy check, CRC) error exists, the network device discards corresponding data (which refers to training data, for example, a second function, a first gradient, or a first weight) in the reward feedback frame or the gradient/weight sharing frame. The reason is that if a data frame is transmitted over an air interface, an error may occur, and incorrect data (which refers to training data, for example, the second function, the first gradient, or the first weight) may cause negative impact on reinforcement learning training. The negative impact can be effectively eliminated by using the foregoing method.

The foregoing steps S9 to S12 are also referred to as a related process of reinforcement learning of the encoding neural network.

It should be noted that an execution sequence between steps S5 to S8 and steps S9 to S12 is not limited herein. For example, steps S5 to S8 may be first performed, and then steps S9 to S12 are performed. Alternatively, steps S9 to S12 may be first performed, and then steps S5 to S8 are performed. Alternatively, steps S5 to S8 may be first performed for a specific quantity of rounds (that is, S5 to S8 are repeatedly performed for a specific quantity of times), and then steps S9 to S12 are performed for a specific quantity of rounds (that is, S9 to S12 are repeatedly performed for a specific quantity of times). Alternatively, steps S9 to S12 may be first performed for a specific quantity of rounds (that is, S9 to S12 are repeatedly performed for a specific quantity of times), and then steps S5 to S8 are performed for a specific quantity of rounds (that is, S5 to S8 are repeatedly performed for a specific quantity of times).

S13. Stop training feedback.

In step S13, when a specific condition is met in a process of performing steps S5 to S8 "unsupervised learning" and steps S9 to S12 "reinforcing learning", the training feedback is stopped. The condition includes but is not limited to the following:

A. After a specific quantity of rounds of training are performed, step S13 is performed. For example, step S13 is performed after "unsupervised learning" in steps S5 to S8 and "reinforcing learning" in steps S9 to S12 are respectively performed for five rounds.

B. When a reward difference of the decoding neural network (and/or the encoding neural network) reaches a specific threshold, step S13 is performed, where the reward difference refers to a difference between rewards obtained in two times of training. For example, the threshold may be $1.0 \times 10^{-3}$. Specifically, when the reward difference is less than $1.0 \times 10^{-3}$, step S13 is performed.

C. The decoding neural network processes the training sample (for example, the first symbol stream) to obtain the second data stream. The decoding neural network obtains a bit error rate (also referred to as a packet error rate) by checking the first data stream (sample) and the second data stream. When the packet error rate is less than or equal to a specific threshold, step S13 is performed. The threshold may be $1.0 \times 10^{-2}$, $1.0 \times 10^{-3}$, or $1.0 \times 10^{-6}$.

Step S13 is triggered by the terminal device (the receive end). Specifically, the terminal device sends a training stop feedback frame to the network device, and the training stop feedback frame may be a variation of an existing acknowledgment/negative acknowledgment (ACK/NACK) frame. For example, the training stop feedback frame includes one or more control fields shown in Table 1.

**Table 1**

| Training stop feedback frame | | |
|---|---|---|
| Field name | Length (bit/bit) | Description |
| Waveform indication field "EWF" | 1 bit | "0" indicates that an original waveform signal is used for communication (between the transmit end and the receive end); |
| | | " 1" indicates that communication is performed by using an enhanced waveform signal processed by the encoding/decoding neural network |
| Quantization level " QLV" | 3 bit | Indicates 8 quantization levels of the neural network |
| Reward aggregation level "RALV" | 4 bit | Indicates 16 reward aggregation manners |
| Training stop indication "TSI" | 1 bit | "0" indicates that the training is in progress; " 1" indicates that the training stops |

S14. Stop training.

In step S14, similar to step S13, stopping the training may be triggered by the network device (the transmit end).

It should be noted that step S14 and step S13 are independent of each other, and an execution sequence of step S14 is not limited herein. Step S14 may be any step performed from step S5 to step S12.

S15. Stop training instruction.

After step S14, step S15 is performed. In step S15, the network device sends a training stop indication frame to the terminal device. For example, the training stop indication frame is similar to the "training stop feedback frame" in step S13, and details are not described herein again.

S16. Error packet monitoring.

In step S16, the terminal device determines, by detecting channel quality (for example, the first channel in the foregoing embodiment) or detecting an error packet rate, whether to trigger retraining. For example, the decoding neural network in the terminal device processes the training sample (for example, the first symbol stream) to obtain the second data stream. The decoding neural network obtains a bit error rate (also referred to as a packet error rate) by checking the first data stream (sample) and the second data stream. When the packet error rate is greater than or equal to a specific threshold, step S17 is performed. The threshold may be $1.0 \times 10^{-9}$.

S17. Retraining request.

In step S17, the terminal device initiates a retraining request to the network device, to trigger related training steps of the foregoing step S5 to S8 and step S9 to S12.

Optionally, the terminal device initiates the retraining request by sending a retraining request frame to the network device. For example, the retraining request frame includes control fields shown in Table 2.

**Table 2**

| Retraining request frame | | |
|---|---|---|
| Field name | Length (bit/bit) | Description |
| Retraining request "RTR" | 1 bit | "0" indicates that retraining is not required; " 1" indicates that retraining is requested |

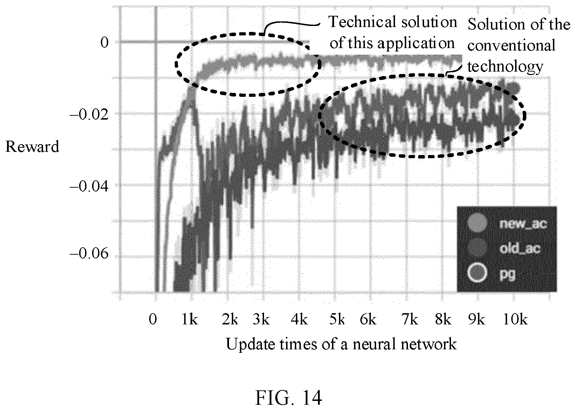

In this embodiment, end-to-end joint optimization may be performed on the encoding neural network (and the filtering neural network) of the transmit end and the decoding neural network of the receive end through the foregoing steps. Refer to FIG. 14. FIG. 14 is a schematic diagram of a simulation experiment according to an embodiment of this application. As shown in FIG. 14, in an example of a simulation experiment scenario, a convergence speed and convergence performance of the technical solution in this application are greatly improved compared with those in the solution of the conventional technology.

Based on the training part described in the foregoing embodiment, the following describes a communication part in embodiments of this application.

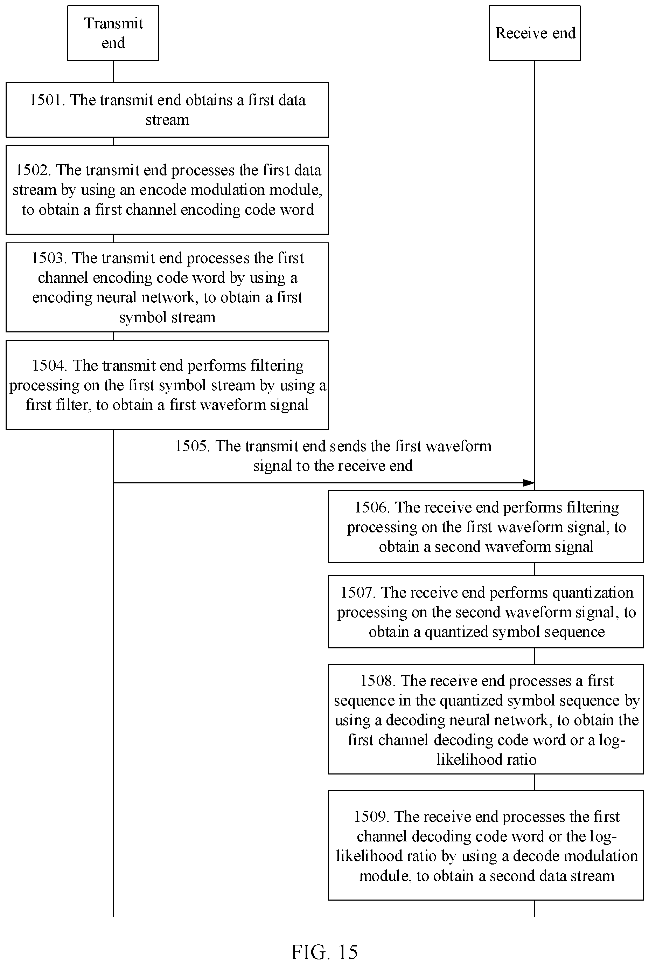

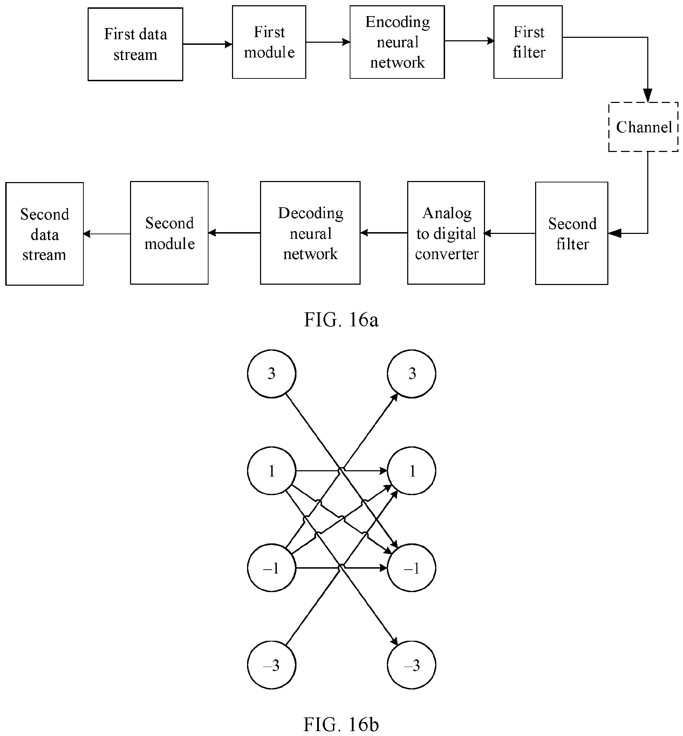

First, the communication part is described with reference to the accompanying drawings. Refer to FIG. 15. FIG. 15 is a schematic diagram of another embodiment of a neural network-based communication method according to an embodiment of this application. For example, an example in which the encoding neural network is independent of the first module, and the decoding neural network is independent of the second module is used for description. In addition, a solution in which a related function of the first module is integrated into the encoding neural network, and a related function of the second module is integrated into the decoding neural network is similar to the method in the embodiment shown in FIG. 15, and details are not described herein again. For ease of understanding, the following provides descriptions with reference to FIG. 16a. FIG. 16a is a schematic diagram of a structure of still another communication system according to an embodiment of this application.

The neural network-based communication method provided in this embodiment of this application includes the following steps.

1501. The transmit end obtains the first data stream.

In this embodiment, similar to the foregoing step 801, the transmit end obtains the first data stream. The first data stream is data communicated and exchanged between the transmit end and the receive end.

1502. The transmit end processes the first data stream by using the first module, to obtain the first channel encoding code word.

In this embodiment, the transmit end uses the first module to process the first data stream, to obtain the first channel encoding code word.

Optionally, the first module may be cascaded outside the communication system, to further improve error-free transmission performance of the system.

1503. The transmit end processes the first channel encoding code word by using the encoding neural network, to obtain the first symbol stream.

In this embodiment, the transmit end processes, by using the encoding neural network, the first channel encoding code word generated by the first module, to obtain the first symbol stream.

Specifically, the first data stream is a binary digit stream. The first symbol stream is a real number symbol stream or a complex number symbol stream, and a symbol rate of the first symbol stream is $f_s$.

Optionally, the transmit end may further perform operations such as rate matching (Rate matching) and modulation on the first symbol stream. The rate matching (Rate matching) refers to that a bit on a transmission channel is repeated (repeated) or punctured (punctured) to match a bearer capability of a physical channel, and a bit rate required for a transmission format is reached during channel mapping.

1504. The transmit end performs filtering processing on the first symbol stream by using a first filter, to obtain a first waveform signal.

In this embodiment, to introduce intersymbol interference in the first symbol stream, the transmit end uses the first filter to perform filtering processing on the first symbol stream, to obtain the first waveform signal.

Optionally, a low-pass filter may be selected as the first filter.

Optionally, the first filter may further filter out an out-of-band signal in the first symbol stream, to limit a sending bandwidth.

1505. The transmit end sends the first waveform signal to the receive end.

In this embodiment, the transmit end sends the first waveform signal to the receive end through a channel. Specifically, the channel is a channel with simple communication configuration, and has a basic transmit and receive capability. In this embodiment of this application, the channel is referred to as a first channel.

1506. The receive end performs filtering processing on the first waveform signal, to obtain a second waveform signal.

In this embodiment, the receive end uses a second filter to perform filtering processing on a first waveform signal transmitted through the first channel, to obtain the second waveform signal.

Optionally, a matched filter may be selected as the second filter

In an optional implementation, a same root-raised cosine filter (Root-raised cosine filter, RRC filter) may be selected as the first filter and the second filter. The RRC filter is configured to perform signal shaping (signal shaping).

1507. The receive end performs quantization processing on the second waveform signal, to obtain a quantized symbol sequence.

In this embodiment, after obtaining the second waveform signal, the receive end performs quantization processing on the second waveform signal by using an analog-to-digital converter (analog-to-digital converter, ADC), to obtain the quantized symbol sequence.

Specifically, when the first symbol stream includes x symbol groups, and each of the symbol groups includes n symbols, the first waveform signal includes x symbol groups, where x is a positive integer greater than or equal to 1, and n is a positive integer greater than or equal to 1; and when the receive end performs quantization processing on n symbols in the first waveform signal, to obtain the quantized symbol sequence, a length of the quantized symbol sequence is nM, where M is an oversampling rate of the receive end.

The quantized symbol sequence has the following features: one group of first data streams is mapped to one or more quantized symbol sequences, bit flipping exists at most once in each symbol of the quantized symbol sequence, and the bit flipping is 0 to 1 or 1 to 0.

Optionally, the analog-to-digital converter may be an oversampling analog-to-digital converter. When an oversampling rate of the analog-to-digital converter is M, a symbol rate of the quantized symbol sequence is $Mxf_s$, where M is an integer greater than 0. Oversampling (oversampling) is a process of sampling a signal at a frequency twice a signal bandwidth or at a highest frequency thereof.

Optionally, the analog-to-digital converter may alternatively be an analog-to-digital converter with limited sampling precision (quantization precision), for example, an oversampling analog-to-digital converter with the sampling precision of 1 bit (bit) (referred to as 1 bit oversampling ADC for short).

Specifically, a communication system using the 1 bit oversampling ADC is used as an example for description. Specifically, to implement error-free signal propagation and spectral efficiency greater than 1 bit/symbol (bit/symbol), the system combines two symbols into a super symbol (super symbol) for sending, and performs low-precision oversampling detection at the receive end. As shown in FIG. 16b, FIG. 16b is a schematic diagram of a principle of an oversampling-based 1 bit communication system according to an embodiment of this application. A communication system selects 8 transition states from two kinds of 4-amplitude-shift keying (Amplitude-shift keying, ASK) for transmission, and a selection criterion is that a transmitted super symbol can be distinguished without aliasing at the receive end.

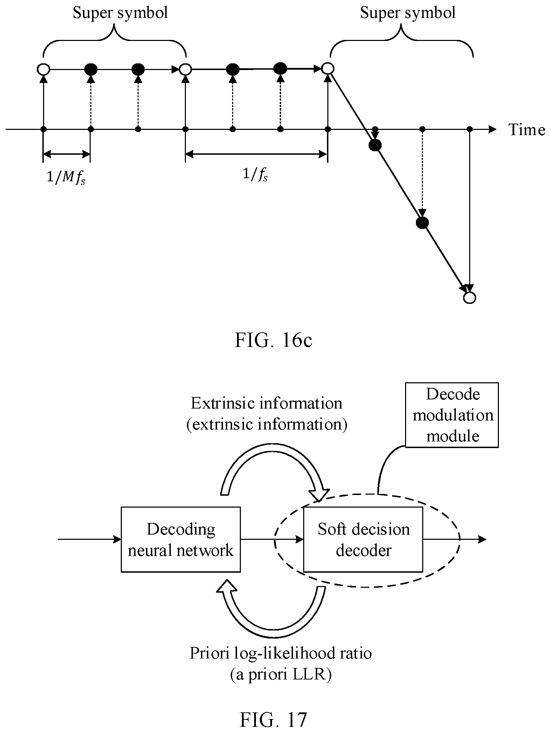

As shown in FIG. 16c, FIG. 16c is another schematic diagram of a principle of an oversampling-based 1 bit communication system according to an embodiment of this application. An ADC oversampling rate of the receive end is M, and M + 1 sampling points that are obtained by the receive end through the ADC are used to detect and recover a sent signal. For example, a first symbol is (1, 1, 1, 1), a second symbol is (1, -1, -1, -1), and spectral efficiency that can be achieved is 1.5 bit/symbol.

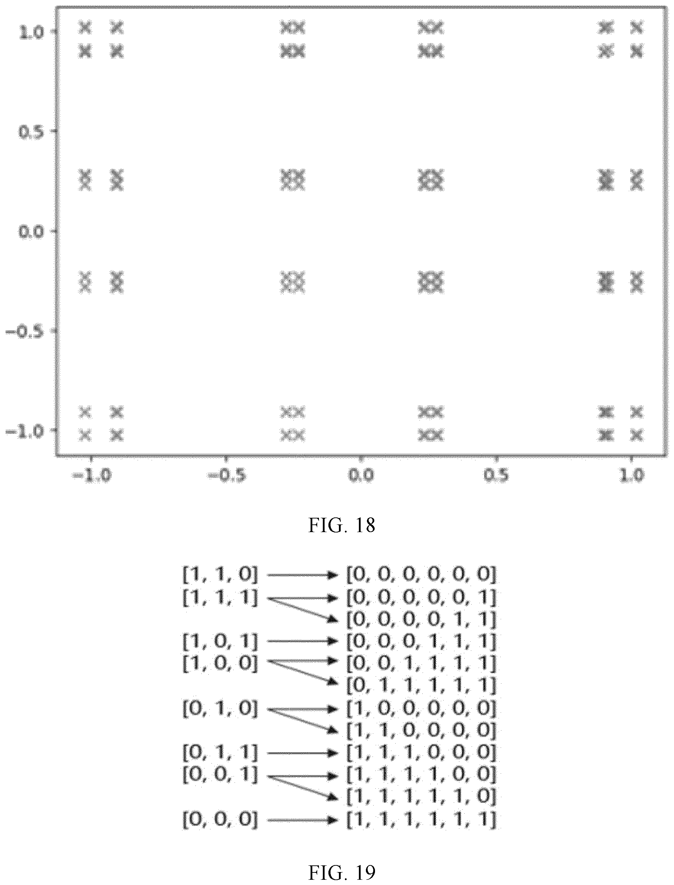

For example, an example in which a length of the first data stream is 3 bits and an oversampling rate M of the ADC on the receive end side is equal to 5 is used for description. On the transmit end side, the encoding neural network maps the first data stream whose length is 3 bits to two real number symbols, that is, the first symbol stream is two real number symbols. On the receive end side, after performing quantization processing on the first symbol stream by an ADC whose oversampling rate is 5, a quantized symbol sequence whose length is 10 bits is obtained. Refer to FIG. 18. FIG. 18 is a symbol mapping diagram according to an embodiment of this application. In another representation method, the encoding neural network maps a first data stream whose length is 3 bits to two real number symbols, or may be represented as: mapping 6 bits to two complex number symbols. In this case, after performing quantization processing on the first symbol stream by an ADC whose oversampling rate is 5 at the receive end, a quantized symbol sequence whose length is 20 bits is obtained.

1508. The receive end processes the first sequence in the quantized symbol sequence by using the decoding neural network, to obtain the first channel decoding code word or the log-likelihood ratio.

In this embodiment, the receive end processes the first sequence in the quantized symbol sequence by using the decoding neural network, to obtain the first channel decoding code word or the log-likelihood ratio.

Optionally, a length of the first sequence in the quantized symbol sequence is [(n - 1)M + 1, nM]. For example, n = 2. That is, when the first symbol stream includes x symbol groups, and each symbol group includes two symbols, a length of a first sequence used by the decoding neural network for processing (also referred to as detection) is [M + 1, 2M]. A longer length of the first sequence indicates a higher oversampling rate, and better performance may be obtained.

For example, on the basis of the example shown in FIG. 18, that is, that the length of the first data stream is 3 bits, and the oversampling rate M of the ADC on the receive end side is equal to 5 is used as an example for description. The decoding neural network processes the first sequence in the quantized symbol sequence. A length of the first sequence is 6 bits, that is, M + 1 = 6. In this case, a mapping relationship between the first sequence and the first data stream is shown in FIG. 19. FIG. 19 is a schematic diagram of symbol mapping according to an embodiment of this application. Specifically, a first data stream [1,1,0] is mapped to a first sequence [0,0,0,0,0,0]; and a first data stream [1,1,1] is mapped to a first sequence [0,0,0,0,0,1], a first sequence [0,0,0,0,1,1], or the like. Because a plurality of first sequences may be corresponding to one piece of data, even if there is a difference among quantized symbol sequences generated after the oversampling process, data can be finally correctly restored. A plurality of sequences may be corresponding to one sequence, and one sequence cannot be corresponding to a plurality of pieces of data, so as to ensure a correctness percentage of decoding.

Optionally, a loss function that may be selected for the decoding neural network (and/or the encoding neural network) includes but is not limited to a binary cross entropy, a classification cross entropy, or a mean square error. For example, if the binary cross entropy is selected, an objective of end-to-end joint optimization in this embodiment of this application is to minimize a cross entropy between input and output.

1509. The receive end processes the first channel decoding code word or the log-likelihood ratio by using the second module, to obtain the second data stream.

In this embodiment, the receive end processes the first channel decoding code word or the log-likelihood ratio by using the second module, to obtain the second data stream.

Optionally, as shown in FIG. 17, FIG. 17 is a schematic diagram of an iterative receiving structure according to an embodiment of this application. In this embodiment of this application, the second module may perform soft decision decoding, and the second module may also be referred to as a soft decision decoder. Soft decision decoding is a technology that uses digital technology to achieve optimal or near-optimal decoding on error-correcting code. Performance of the soft decision decoding is close to that of optimal maximum likelihood decoding, but the decoder of the soft decision decoding is simpler than that of the maximum likelihood decoding. A loss function of a decoding neural network can be binary cross entropy (binary cross entropy). In the receive end using the foregoing structure, the decoding neural network and the second module may perform iterative receiving (including training and inference). For example, the decoding neural network transmits extrinsic information (extrinsic information) to the second module (the soft decision decoder). After performing a decoding operation on the extrinsic information, the second module sends a decoding result to the decoding neural network, where the decoding result is a priori log-likelihood ratio (a priori LLR). Performance of the communication system can be further improved by using the foregoing structure. Soft decision decoding is a technology that uses digital technology to achieve optimal or near-optimal decoding on error-correcting code. Performance of the soft decision decoding is close to that of optimal maximum likelihood decoding, but the decoder of the soft decision decoding is simpler than that of the maximum likelihood decoding.

Optionally, the second module may be cascaded outside the communication system, to further improve error-free transmission performance of the system.

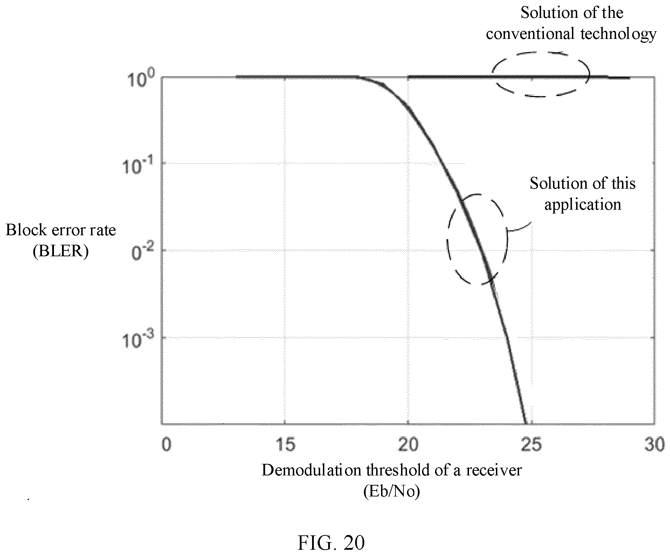

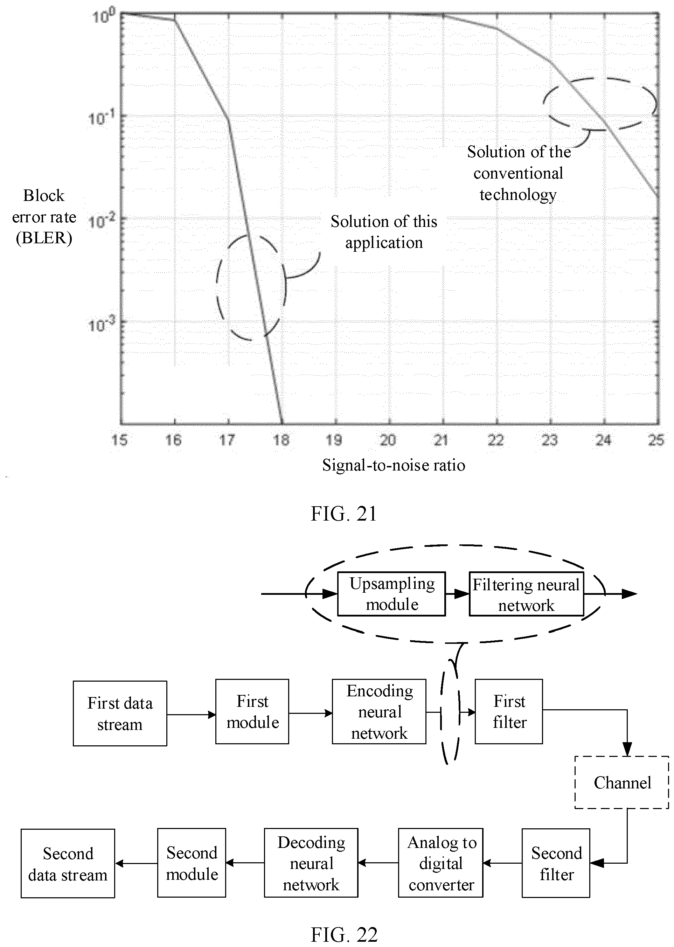

In this embodiment of this application, the receive end may perform quantization processing on a first symbol stream by using an oversampled analog-to-digital converter, to obtain a quantized symbol sequence. The following correspondence exists between the quantized symbol sequence and the first data stream: one or more quantized symbol sequences are uniquely corresponding to one first data stream. Therefore, even if there is a difference among quantized symbol sequences generated after the oversampling process of the analog-to-digital converter, data can be finally correctly restored. A plurality of sequences may be corresponding to one sequence, and one sequence cannot be corresponding to a plurality of pieces of data, so as to ensure a correctness percentage of decoding. Refer to FIG. 20 and FIG. 21. FIG. 20 is a schematic diagram of another simulation experiment according to an embodiment of this application, and FIG. 21 is a schematic diagram of still another simulation experiment according to an embodiment of this application. FIG. 20 is corresponding to a communication system without an independent first module, and FIG. 21 is corresponding to a communication system with an independent first module. Specifically, a demodulation threshold of a receiver (Eb/No) is defined as energy per bit divided by noise power spectral density. In this case, Eb indicates a signal bit energy (unit: joule/bit), and No indicates the noise power spectrum density (watt/hertz). As the demodulation threshold of the receiver increases, a block error rate (block error rate, BLER) in the technical solution of this application decreases significantly compared with a block error rate in the solution of the conventional technology, and performance of the block error rate is greatly improved compared with that in the solution of the conventional technology.

On the basis of the foregoing embodiment, a filtering neural network may be further introduced on a transmit end side. For example, the filtering neural network is deployed between the encoding neural network and the first filter. Optionally, an upsampling module may be further introduced between the encoding neural network and a filtering neural network. The filtering neural network may be used as a part of the encoding neural network, or may be independent of the encoding neural network. For ease of understanding, refer to FIG. 22. FIG. 22 is a schematic diagram of a structure of yet another communication system according to an embodiment of this application.

In another optional implementation, the filtering neural network may be introduced on a receive end side. Optionally, the filtering neural network is deployed at a transmit end, and the filtering neural network is also deployed on the receive end side. Optionally, the filtering neural network is deployed only on the receive end side. The filtering neural network may be deployed between a second filter and an analog-to-digital converter, or the filtering neural network may be deployed between the analog-to-digital converter and a decoding neural network. This is not limited herein.

A 1 bit communication system based on oversampling is used as an example. Due to an information loss caused by 1 bit quantization, effective channel estimation and equalization cannot be finished in a conventional manner such as a pilot. Therefore, in a fading channel scenario, performance of the communication system is relatively poor. Fading refers to a phenomenon that an amplitude of a received signal changes randomly due to the change of the channel, that is, signal fading. A channel that causes signal fading is referred to as a fading channel.

Based on this, a filtering neural network is disposed, and the filtering neural network performs filtering processing on a first symbol stream output from the encoding neural network, to obtain a first intermediate symbol. When the communication system further includes an upsampling module, the upsampling module performs upsampling processing on the first intermediate symbol, to obtain a second intermediate symbol, where the second intermediate symbol is obtained by performing zero insertion processing on the first intermediate symbol after a sampling point. Then, a filtering neural network at the transmit end performs filtering processing on the second intermediate symbol to obtain the first symbol stream, where the filtering processing performed by the filtering neural network includes introducing intersymbol interference (Intersymbol Interference, ISI).

Specifically, the filtering neural network may alternatively be a single-layer neural network node, and each neural network node includes a weight z. For example, if G neural network nodes are included, a to-be-trained weight is [zO, zl, ..., zG-1], where z is a positive integer, and G is a positive integer. The module and an up-sampled time-domain signal are convolved to implement filtering processing is equal to that the module and an up-sampled frequency-domain signal are multiplied to realize filtering processing.

Optionally, the encoding neural network, the decoding neural network, and the filtering neural network may be jointly trained; or a pre-training model (for example, the encoding neural network and the decoding neural network that are trained on an additive white Gaussian noise (Additive White Gaussian Noise, AWGN) channel) may be used for initialization, and then the filtering neural network is trained individually.

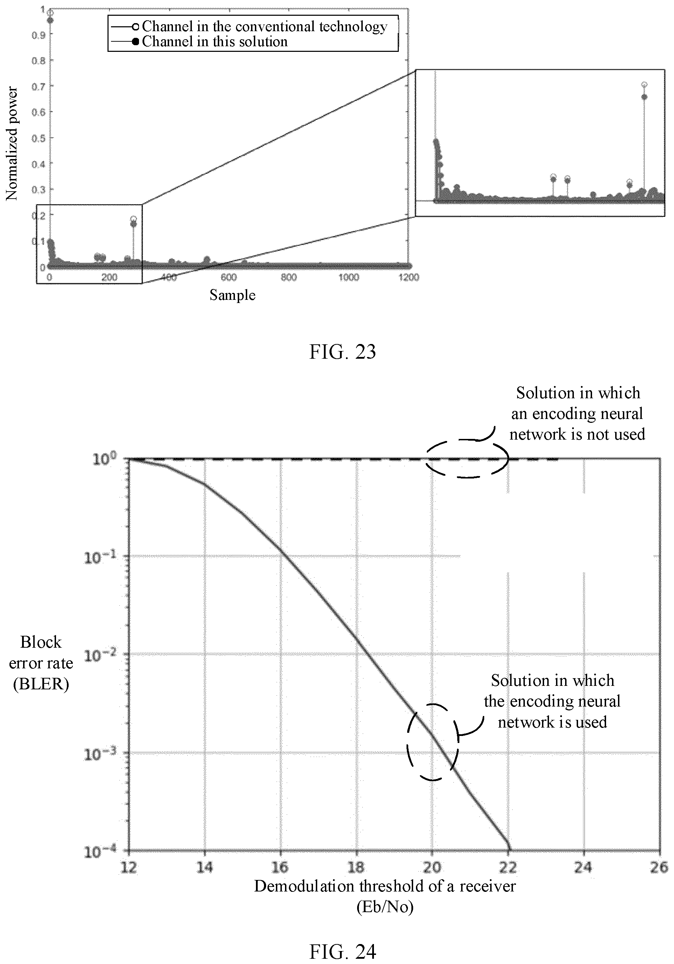

In this embodiment of this application, the filtering neural network is added after the encoding neural network. In a fading channel scenario, the filtering neural network is combined with the encoding neural network and the decoding neural network for end-to-end training optimization. Specifically, the filtering neural network filters a symbol (the first symbol stream) mapped by the oversampled encoding neural network, to mitigate impact of a fading channel on a system. When quantization precision at the receive end is relatively high, the filtering neural network may play a pre-equalization effect after training. However, due to the information loss caused by low precision quantization, the filter neural network is more difficult to learn pre-equalization in the low precision quantization, and is more inclined to another local optimal solution. Through the joint training optimization of the encoding neural network, decoding neural network, and the filtering neural network, the transmit end and the receive end can use multipath interference of a channel to distinguish sent signals. This improves communication performance in the fading channel scenario. Refer to FIG. 23. FIG. 23 is a schematic diagram of yet another simulation experiment according to an embodiment of this application. The simulation experiment shown in FIG. 23 specifically refers to a normalized power of a channel in a scenario in which a receive end uses a low-precision ADC. "A channel in the conventional technology " is a channel measurement result in a communication system (for example, the communication system shown in FIG. 16a) without a filtering neural network; and "a channel in this solution" is a channel measurement result in a communication system (for example, the communication system shown in FIG. 22) with the filtering neural network. It can be learned from FIG. 23 that the communication system with the filtering neural network does not obtain a pre-equalization effect in a scenario of an ADC with low quantization precision, and therefore is more inclined to another local optimal solution. The foregoing technical effect description is met. Refer to FIG. 24. FIG. 24 is a schematic diagram of still yet another simulation experiment according to an embodiment of this application. Compared with a solution (for example, the communication system shown in FIG. 16a) in which an encoding neural network is not used, a block error rate (block error rate, BLER) decreases greatly in a solution in which the encoding neural network is used. Performance of the block error rate in the solution in which the encoding neural network is used is greatly improved.

It should be noted that various modules and components in the foregoing embodiments, for example, a first module, an upsampling module, a first filter, a second filter, or an analog-to-digital converter may be realized by a processor for relevant functions or may be independently realized components. This is not limited herein.

The foregoing mainly describes the solutions provided in embodiments of this application from the perspective of the methods. It may be understood that, to implement the foregoing functions, a communication apparatus includes corresponding hardware structures and/or software modules for performing the functions. A person of ordinary skill in the art should easily be aware that, in combination with the examples described in the embodiments disclosed in this specification, modules, algorithms, and steps may be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

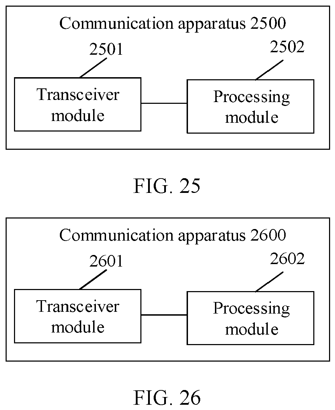

The following describes in detail a communication apparatus in this application. Refer to FIG. 25. FIG. 25 is a schematic diagram of an embodiment of a communication apparatus according to an embodiment of this application. A communication apparatus 2500 may be deployed in a network device or a terminal device, and the communication apparatus 2500 includes:

a transceiver module 2501, configured to obtain a first data stream; and
a processing module 2502, configured to process the first data stream by using an encoding neural network, to obtain a first symbol stream, where the encoding neural network includes a first neural network, and the first neural network reuses a part or all of a decoding neural network and/or a parameter of a part or all of the decoding neural network, where
the transceiver module 2501 is further configured to output the first symbol stream.

In some optional embodiments of this application,
the transceiver module 2501 is further configured to receive a first weight, where the first weight is from the decoding neural network, and the first weight is used to train the first neural network.

In some optional embodiments of this application,
the transceiver module 2501 is further configured to receive a first gradient, where the first gradient is from the decoding neural network, and the first gradient is used to train the first neural network.

In some optional embodiments of this application,

the transceiver module 2501 is further configured to receive a second function, where the second function is from the decoding neural network, and the second function is a loss function and/or a reward function; and
the transceiver module 2501 is further configured to process the second function by using the encoding neural network, to obtain a second gradient, where the second gradient is used to train the encoding neural network.

In some optional embodiments of this application,

the processing module 2502 is specifically configured to perform filtering processing on the first symbol stream, to obtain a first waveform signal, where an out-of-band signal is filtered out from the first waveform signal; and
the transceiver module 2501 is specifically configured to output the first waveform signal.

In some optional embodiments of this application,

the processing module 2502 is specifically configured to perform encoding processing on the first data stream, to obtain a first channel encoding code word; and
the processing module 2502 is specifically configured to process the first channel encoding code word by using the encoding neural network, to obtain the first symbol stream.

In some optional embodiments of this application,

the processing module 2502 is specifically configured to process the first channel encoding code word by using the encoding neural network, to obtain a first intermediate symbol; and
the processing module 2502 is specifically configured to perform filtering processing on the first intermediate symbol by using a filtering neural network, to obtain the first symbol stream, where intersymbol interference is introduced into the first symbol stream.

In some optional embodiments of this application,

the processing module 2502 is specifically configured to perform upsampling processing on the first intermediate symbol, to obtain a second intermediate symbol; and
the processing module 2502 is specifically configured to perform filtering processing on the second intermediate symbol by using the filtering neural network, to obtain the first symbol stream.

In a possible implementation, the transceiver module 2501 is configured to perform step 801, step 803, and step 806 in the embodiment corresponding to FIG. 8.
In a possible implementation, the processing module 2502 is configured to perform step 802 and step 807 in the embodiment corresponding to FIG. 8.
In a possible implementation, the transceiver module 2501 is configured to perform step 1501 and step 1505 in the embodiment corresponding to FIG. 15.
In a possible implementation, the processing module 2502 is configured to perform step 1502, step 1503, and step 1504 in the embodiment corresponding to FIG. 15.
Refer to FIG. 26. FIG. 26 is a schematic diagram of an embodiment of a communication apparatus according to an embodiment of this application. A communication apparatus 2600 may be deployed in a network device or a terminal device, and the communication apparatus 2600 includes:

a transceiver module 2601, configured to obtain a first data stream, where
the transceiver module 2601 is further configured to receive a first symbol stream, where the first symbol stream is from a transmit end, the first symbol stream is obtained by the transmit end by processing the first data stream by using an encoding neural network, the encoding neural network includes a first neural network, and the first neural network reuses a part or all of a decoding neural network and/or a parameter of a part or all of the decoding neural network; and
a processing module 2602, configured to process the first symbol stream by using the decoding neural network, to obtain a second data stream, where
the processing module 2602 is further configured to train the decoding neural network based on the first data stream and the second data stream.

In some optional embodiments of this application,

the processing module 2602 is specifically configured to process the first data stream and the second data stream by using the decoding neural network, to obtain a first function, where the first function is a loss function and/or a reward function;
the processing module 2602 is specifically configured to process the first function by using the decoding neural network, to obtain a first gradient; and
the processing module 2602 is specifically configured to train the decoding neural network by using the first gradient.

In some optional embodiments of this application,
the transceiver module 2601 is further configured to send the first gradient to the transmit end, where the first gradient is used to train the first neural network in the encoding neural network.
In some optional embodiments of this application,

the processing module 2602 is further configured to generate a first weight by using the decoding neural network, where the first weight is a weight of the decoding neural network; and

the processing module 2602 is further configured to send the first weight to the transmit end, where the first weight is used to train the first neural network in the encoding neural network.

In some optional embodiments of this application,

the processing module 2602 is further configured to process the first data stream and the second data stream by using the decoding neural network, to obtain a second function, where the second function is a loss function and/or a reward function; and

the transceiver module 2601 is further configured to send the second function to the transmit end, where the second function is used to train the encoding neural network.

In some optional embodiments of this application,

the transceiver module 2601 is specifically configured to receive a first waveform signal, where the first waveform signal is obtained by the transmit end by performing filtering processing on the first symbol stream;

the processing module 2602 is specifically configured to perform quantization processing on the first waveform signal, to obtain a quantized symbol sequence, where one group of the first data streams is mapped to one or more of the quantized symbol sequences, bit flipping exists at most once in each symbol of the quantized symbol sequence, and the bit flipping is 0 to 1 or 1 to 0; and

the processing module 2602 is specifically configured to process a first sequence in the quantized symbol sequence by using the decoding neural network, to obtain the second data stream.

In some optional embodiments of this application,

the transceiver module 2601 is specifically configured to receive the first waveform signal interfered by a first channel, where the first channel is a channel between the receive end and the transmit end; and

the processing module 2602 is specifically configured to perform quantization processing on the first waveform signal interfered by the first channel, to obtain the quantized symbol sequence.

In some optional embodiments of this application,

the processing module 2602 is specifically configured to process the first waveform signal by using the decoding neural network, to obtain a first channel decoding code word or a log-likelihood ratio; and

the processing module 2602 is specifically configured to process the first channel decoding code word or the log-likelihood ratio, to obtain the second data stream.

In some optional embodiments of this application,

the processing module 2602 is specifically configured to perform quantization processing on the first waveform signal, to obtain the quantized symbol sequence; and

the processing module 2602 is specifically configured to process the first sequence in the quantized symbol sequence by using the decoding neural network, to obtain the first channel decoding code word or the log-likelihood ratio.

In some optional embodiments of this application,

the processing module 2602 is specifically configured to: when the first symbol stream includes x symbol groups, and each of the symbol groups includes n symbols, the first waveform signal includes x symbol groups, where x is a positive integer greater than or equal to 1, and n is a positive integer greater than or equal to 1; and

the processing module 2602 performs quantization processing on n symbols in the first waveform signal, to obtain the quantized symbol sequence, a length of the quantized symbol sequence is nM, and a length of the first sequence in the quantized symbol sequence is $[(n - 1)M + 1, nM]$, where M is an oversampling rate of the receive end.

In some optional embodiments of this application,

the processing module 2602 is specifically configured to perform filtering processing on the first waveform signal, to obtain a second waveform signal; and

the processing module 2602 is specifically configured to perform quantization processing on the second waveform signal, to obtain the quantized symbol sequence.

In a possible implementation, the transceiver module 2601 is configured to perform step 803 and step 806 in the embodiment corresponding to FIG. 8.

In a possible implementation, the processing module 2602 is configured to perform step 804 and step 805 in the embodiment corresponding to FIG. 8.

In a possible implementation, the transceiver module 2601 is configured to perform step 1505 in the embodiment corresponding to FIG. 15.

In a possible implementation, the processing module 2602 is configured to perform step 1506, step 1507, step 1508, and step 1509 in the embodiment corresponding to FIG. 15.

It should be noted that content such as information exchange and an execution process between modules/components in the communication apparatus 2500/the communication apparatus 2600 is based on a same concept as the method embodiments corresponding to FIG. 8 to FIG. 24 in this application. For specific content, refer to the description in the foregoing method embodiments in this application. Details are not described herein again.

It should be noted that, for a specific implementation and a beneficial effect of the communication apparatus 2500/communication apparatus 2600, refer to the description in the method embodiments corresponding to FIG. 8 to FIG. 24. Details are not described herein again.

The communication apparatus in the foregoing embodiments may be a network device, or may be a chip used in the network device, or another combined part, component, or the like that can implement a function of the network device. When the communication apparatus is a network device, the transceiver module may be a transceiver, the transceiver may include an antenna, a radio frequency circuit, and the like, and the processing module may be a processor, for example, a baseband chip. When the communication apparatus is a component having functions of the network device, the transceiver module may be a radio frequency unit, and the processing module may be a processor. When the communication apparatus is a chip system, the transceiver module may be an input port of the chip system, the transceiver module may be an output interface of the chip system, and the processing module may be a processor of the chip system, for example, a central processing unit (central processing unit, CPU) and/or a neural-network processing unit (neural-network processing unit, NPU).

The communication apparatus in the foregoing embodiments may be a terminal device, or may be a chip used in the terminal device, or another combined part, component, or the like that can implement a function of the foregoing terminal device. When the communication apparatus is a terminal device, the transceiver module may be a transceiver, the transceiver may include an antenna, a radio frequency circuit, and the like, and the processing module may be a processor, for example, a baseband chip. When the communication apparatus is a component that has a function of the terminal device, the transceiver module may be a radio frequency unit, and the processing module may be a processor. When the communication apparatus is a chip system, the transceiver module may be an input port of the chip system, the transceiver module may be an output interface of the chip system, and the processing module may be a processor of the chip system, for example, a central processing unit (central processing unit, CPU) and/or a neural-network processing unit (neural-network processing unit, NPU).

In this embodiment of this application, a memory included in the communication apparatus is mainly configured to store a software program and data, for example, store the first data stream or the first gradient described in the foregoing embodiment. The communication apparatus further has the following functions:

a transceiver, configured to obtain a first data stream; and
a processor, configured to process the first data stream by using an encoding neural network, to obtain a first symbol stream, where the encoding neural network includes a first neural network, and the first neural network reuses a part or all of a decoding neural network and/or a parameter of a part or all of the decoding neural network, where the transceiver is further configured to output the first symbol stream.

In some optional embodiments of this application,
the transceiver is further configured to receive a first weight, where the first weight is from the decoding neural network, and the first weight is used to train the first neural network.

In some optional embodiments of this application,
the transceiver is further configured to receive a first gradient, where the first gradient is from the decoding neural network, and the first gradient is used to train the first neural network.

In some optional embodiments of this application,

the transceiver is further configured to receive a second function, where the second function is from the decoding neural network, and the second function is a loss function and/or a reward function; and

the transceiver is further configured to process the second function by using the encoding neural network, to obtain a second gradient, where the second gradient is used to train the encoding neural network.

In some optional embodiments of this application,

the processor is specifically configured to perform filtering processing on the first symbol stream, to obtain a first waveform signal, where an out-of-band signal is filtered out from the first waveform signal; and
the transceiver is specifically configured to output the first waveform signal.

In some optional embodiments of this application,

the processor is specifically configured to perform encoding processing on the first data stream, to obtain a first channel encoding code word; and
the processor is specifically configured to process the first channel encoding code word by using the encoding neural network, to obtain the first symbol stream.

In some optional embodiments of this application,

the processor is specifically configured to process the first channel encoding code word by using the encoding neural network, to obtain a first intermediate symbol; and
the processor is specifically configured to perform filtering processing on the first intermediate symbol by using a filtering neural network, to obtain the first symbol stream, where intersymbol interference is introduced into the first symbol stream.

In some optional embodiments of this application,

the processor is specifically configured to perform upsampling processing on the first intermediate symbol, to obtain a second intermediate symbol; and
the processor is specifically configured to perform filtering processing on the second intermediate symbol by using the filtering neural network, to obtain the first symbol stream.

The communication apparatus further has the following functions:

a transceiver, configured to obtain a first data stream, where
the transceiver is further configured to receive a first symbol stream, where the first symbol stream is from a transmit end, the first symbol stream is obtained by the transmit end by processing the first data stream by using an encoding neural network, the encoding neural network includes a first neural network, and the first neural network reuses a part or all of a decoding neural network and/or a parameter of a part or all of the decoding neural network; and
a processor, configured to process the first symbol stream by using the decoding neural network, to obtain a second data stream, where
the processor is further configured to train the decoding neural network based on the first data stream and the second data stream.

In some optional embodiments of this application,

the processor is specifically configured to process the first data stream and the second data stream by using the decoding neural network, to obtain a first function, where the first function is a loss function and/or a reward function;
the processor is specifically configured to process the first function by using the decoding neural network, to obtain a first gradient; and
the processor is specifically configured to train the decoding neural network by using the first gradient.

In some optional embodiments of this application,
the transceiver is further configured to send the first gradient to the transmit end, where the first gradient is used to train the first neural network in the encoding neural network.
In some optional embodiments of this application,

the processor is further configured to generate a first weight by using the decoding neural network, where the first weight is a weight of the decoding neural network; and

the processor is further configured to send the first weight to the transmit end, where the first weight is used to train the first neural network in the encoding neural network.

In some optional embodiments of this application,

the processor is further configured to process the first data stream and the second data stream by using the decoding neural network, to obtain a second function, where the second function is a loss function and/or a reward function; and the transceiver is further configured to send the second function to the transmit end, where the second function is used to train the encoding neural network.

In some optional embodiments of this application,

the transceiver is specifically configured to receive a first waveform signal, where the first waveform signal is obtained by the transmit end by performing filtering processing on the first symbol stream; the processor is specifically configured to perform quantization processing on the first waveform signal, to obtain a quantized symbol sequence, where one group of the first data streams is mapped to one or more of the quantized symbol sequences, bit flipping exists at most once in each symbol of the quantized symbol sequence, and the bit flipping is 0 to 1 or 1 to 0; and the processor is specifically configured to process a first sequence in the quantized symbol sequence by using the decoding neural network, to obtain the second data stream.

In some optional embodiments of this application,

the transceiver is specifically configured to receive the first waveform signal interfered by a first channel, where the first channel is a channel between the receive end and the transmit end; and the processor is specifically configured to perform quantization processing on the first waveform signal interfered by the first channel, to obtain the quantized symbol sequence.

In some optional embodiments of this application,

the processor is specifically configured to process the first waveform signal by using the decoding neural network, to obtain a first channel decoding code word or a log-likelihood ratio; and the processor is specifically configured to process the first channel decoding code word or the log-likelihood ratio, to obtain the second data stream.

In some optional embodiments of this application,

the processor is specifically configured to perform quantization processing on the first waveform signal, to obtain the quantized symbol sequence; and the processor is specifically configured to process the first sequence in the quantized symbol sequence by using the decoding neural network, to obtain the first channel decoding code word or the log-likelihood ratio.

In some optional embodiments of this application,

the processor is specifically configured to: when the first symbol stream includes x symbol groups, and each of the symbol groups includes n symbols, the first waveform signal includes x symbol groups, where x is a positive integer greater than or equal to 1, and n is a positive integer greater than or equal to 1; and the processor performs quantization processing on n symbols in the first waveform signal, to obtain the quantized symbol sequence, a length of the quantized symbol sequence is nM, and a length of the first sequence in the quantized symbol sequence is $[(n - 1)M + 1, nM]$, where M is an oversampling rate of the receive end.

In some optional embodiments of this application,

the processor is specifically configured to perform filtering processing on the first waveform signal, to obtain a second waveform signal; and the processor is specifically configured to perform quantization processing on the second waveform signal, to obtain the quantized symbol sequence.

It should be understood that the processing apparatus may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

Herein, "implemented by using hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an application-specific integrated circuit (application-specific integrated circuit, ASIC) or a programmable logic device (programmable logic device, PLD). The PLD may further include a field programmable gate array (field programmable gate array, FPGA), a complex programmable logic device (complex programmable logic device, CPLD), and the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a SoPC (system on a programmable chip, system on a programmable chip).

This application further provides a communication system, including a network device and a terminal device.

An embodiment of this application further provides a computer-readable storage medium, including instructions. When the instructions are run on a computer, the computer controls the communication apparatus to perform any implementation shown in the foregoing method embodiments.

An embodiment of this application further provides a computer program product. The computer program product includes computer program code. When the computer program code is run on a computer, the computer performs any implementation shown in the foregoing method embodiments.

An embodiment of this application further provides a chip system, including a memory and a processor. The memory is configured to store a computer program, and the processor is configured to invoke the computer program from the memory and run the computer program, so that a chip performs any implementation shown in the foregoing method embodiments.

An embodiment of this application further provides a chip system, including a processor. The processor is configured to invoke and run a computer program, so that a chip performs any implementation shown in the foregoing method embodiments.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on an actual requirement to achieve the objectives of the solutions of the embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device to perform the methods in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, communication apparatus, computing device, or data center to another website, computer, communication apparatus, computing device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a communication apparatus or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout this specification does not necessarily refer to a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

In addition, the terms "system" and "network" are usually used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined according to A. However, it should be understood that determining B based on A does not mean that B is determined based on only A. B may alternatively be determined based on A and/or other information.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing system, apparatus, and unit, refer to a corresponding process in the method embodiment. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, technical solutions of this application essentially, or a part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

**Claims**

1. A neural network-based communication method, wherein the method is applied to a transmit end, and the method comprises:

   obtaining, by the transmit end, a first data stream;
   processing, by the transmit end, the first data stream by using an encoding neural network, to obtain a first symbol stream, wherein the encoding neural network reuses a part or all of a decoding neural network; and
   outputting, by the transmit end, the first symbol stream.

2. The method according to claim 1, wherein after the outputting, by the transmit end, the first symbol stream, the method further comprises:
   receiving, by the transmit end, a first weight, wherein the first weight is from the decoding neural network, and the first weight is used to train the encoding neural network.

3. The method according to claim 1 or 2, wherein after the outputting, by the transmit end, the first symbol stream, the method further comprises:
   receiving, by the transmit end, a first gradient, wherein the first gradient is from the decoding neural network, and the first gradient is used to train the encoding neural network.

4. The method according to any one of claims 1 to 3, wherein after the outputting, by the transmit end, the first symbol stream, the method further comprises:

   receiving, by the transmit end, a second function, wherein the second function is from the decoding neural network, and the second function is a loss function and/or a reward function; and
   processing, by the transmit end, the second function by using the encoding neural network, to obtain a second gradient, wherein the second gradient is used to train the encoding neural network.

5. The method according to any one of claims 1 to 4, wherein the outputting, by the transmit end, the first symbol stream comprises:

   performing, by the transmit end, filtering processing on the first symbol stream, to obtain a first waveform signal, wherein an out-of-band signal is filtered out from the first waveform signal; and
   outputting, by the transmit end, the first waveform signal.

6. The method according to any one of claims 1 to 5, wherein the processing, by the transmit end, the first data stream by using an encoding neural network, to obtain a first symbol stream comprises:

   performing, by the transmit end, encoding processing on the first data stream, to obtain a first channel encoding code word; and
   processing, by the transmit end, the first channel encoding code word by using the encoding neural network, to obtain the first symbol stream.

7. The method according to claim 6, wherein the processing, by the transmit end, the first channel encoding code word by using the encoding neural network, to obtain the first symbol stream comprises:

   processing, by the transmit end, the first channel encoding code word by using the encoding neural network, to obtain a first intermediate symbol; and
   performing, by the transmit end, filtering processing on the first intermediate symbol by using a filtering neural network, to obtain the first symbol stream, wherein intersymbol interference is introduced into the first symbol stream.

8. The method according to any one of claims 1 to 7, wherein that the encoding neural network reuses a part or all of a decoding neural network comprises:
   reusing, by the encoding neural network, a part or all of a model of the decoding neural network, a loss function of the decoding neural network, a reward function of the decoding neural network, and/or a parameter of the decoding neural network.

9. A neural network-based communication method, wherein the method is applied to a receive end, and the method comprises:

   obtaining, by the receive end, a first data stream;
   receiving, by the receive end, a first symbol stream, wherein the first symbol stream is from a transmit end, the first symbol stream is obtained by the transmit end by processing the first data stream by using an encoding neural network, and the encoding neural network reuses a part or all of a decoding neural network;
   processing, by the receive end, the first symbol stream by using the decoding neural network, to obtain a second data stream; and
   training, by the receive end, the decoding neural network based on the first data stream and the second data stream.

10. The method according to claim 9, wherein the training, by the receive end, the decoding neural network based on the first data stream and the second data stream comprises:

    processing, by the receive end, the first data stream and the second data stream by using the decoding neural network, to obtain a first function, wherein the first function is a loss function and/or a reward function;
    processing, by the receive end, the first function by using the decoding neural network, to obtain a first gradient; and
    training, by the receive end, the decoding neural network by using the first gradient.

11. The method according to claim 10, wherein after the training, by the receive end, the decoding neural network by using the first gradient, the method further comprises:
    sending, by the receive end, the first gradient to the transmit end, wherein the first gradient is used to train the encoding neural network.

12. The method according to claim 10, wherein after the training, by the receive end, the decoding neural network by using the first gradient, the method further comprises:

    generating, by the receive end, a first weight by using the decoding neural network, wherein the first weight is a weight of the decoding neural network; and
    sending, by the receive end, the first weight to the transmit end, wherein the first weight is used to train the encoding neural network.

13. The method according to any one of claims 9 to 12, wherein after the training, by the receive end, the decoding neural network based on the first data stream and the second data stream, the method further comprises:

    processing, by the receive end, the first data stream and the second data stream by using the decoding neural network, to obtain a second function, wherein the second function is a loss function and/or a reward function; and
    sending, by the receive end, the second function to the transmit end, wherein the second function is used to train the encoding neural network.

14. The method according to any one of claims 9 to 13, wherein the processing, by the receive end, the first symbol stream by using the decoding neural network, to obtain a second data stream comprises:

    receiving, by the receive end, a first waveform signal, wherein the first waveform signal is obtained by the transmit end by performing filtering processing on the first symbol stream;
    performing, by the receive end, quantization processing on the first waveform signal, to obtain a quantized symbol sequence, wherein one group of the first data streams is mapped to one or more of the quantized symbol sequences, bit flipping exists at most once in each symbol of the quantized symbol sequence, and the bit flipping is 0 to 1 or 1 to 0; and
    processing, by the receive end, a first sequence in the quantized symbol sequence by using the decoding neural network, to obtain the second data stream.

15. The method according to claim 14, wherein the performing, by the receive end, quantization processing on the first waveform signal, to obtain a quantized symbol sequence comprises:

receiving, by the receive end, the first waveform signal interfered by a first channel, wherein the first channel is a channel between the receive end and the transmit end; and
performing, by the receive end, quantization processing on the first waveform signal interfered by the first channel, to obtain the quantized symbol sequence.

16. The method according to any one of claims 9 to 15, wherein the processing, by the receive end, the first symbol stream by using the decoding neural network, to obtain a second data stream comprises:

processing, by the receive end, the first waveform signal by using the decoding neural network, to obtain a first channel decoding code word or a log-likelihood ratio; and
processing, by the receive end, the first channel decoding code word or the log-likelihood ratio, to obtain the second data stream.

17. The method according to claim 16, wherein the processing, by the receive end, the first waveform signal by using the decoding neural network, to obtain a first channel decoding code word or a log-likelihood ratio comprises:

performing, by the receive end, quantization processing on the first waveform signal, to obtain the quantized symbol sequence; and
processing, by the receive end, the first sequence in the quantized symbol sequence by using the decoding neural network, to obtain the first channel decoding code word or the log-likelihood ratio.

18. The method according to any one of claims 15 to 17, wherein the performing, by the receive end, quantization processing on the first waveform signal, to obtain a quantized symbol sequence comprises:

when the first symbol stream comprises x symbol groups, and each of the symbol groups comprises n symbols, the first waveform signal comprising x symbol groups, wherein x is a positive integer greater than or equal to 1, and n is a positive integer greater than or equal to 1; and
when the receive end performs quantization processing on n symbols in the first waveform signal, to obtain the quantized symbol sequence, a length of the quantized symbol sequence is nM, and a length of the first sequence in the quantized symbol sequence is $[(n - 1)M + 1, nM]$, wherein M is an oversampling rate of the receive end.

19. The method according to claim 18, wherein that the encoding neural network reuses a part or all of a decoding neural network comprises:
reusing, by the encoding neural network, a part or all of a model of the decoding neural network, a loss function of the decoding neural network, a reward function of the decoding neural network, and/or a parameter of the decoding neural network.

20. A communication apparatus, comprising:

a transceiver module, configured to obtain a first data stream; and
a processing module, configured to: process the first data stream by using an encoding neural network, to obtain a first symbol stream, wherein the encoding neural network reuses a part or all of a decoding neural network, wherein
the transceiver module is further configured to output the first symbol stream.

21. The communication apparatus according to claim 20, wherein
the transceiver module is further configured to receive a first weight, wherein the first weight is from the decoding neural network, and the first weight is used to train the encoding neural network.

22. The communication apparatus according to claim 20 or 21, wherein
the transceiver module is further configured to receive a first gradient, wherein the first gradient is from the decoding neural network, and the first gradient is used to train the encoding neural network.

**23.** The communication apparatus according to any one of claims 20 to 22, wherein

the transceiver module is further configured to receive a second function, wherein the second function is from the decoding neural network, and the second function is a loss function and/or a reward function; and
the transceiver module is further configured to process the second function by using the encoding neural network, to obtain a second gradient, wherein the second gradient is used to train the encoding neural network.

**24.** The communication apparatus according to any one of claims 20 to 23, wherein

the processing module is specifically configured to perform filtering processing on the first symbol stream, to obtain a first waveform signal, wherein an out-of-band signal is filtered out from the first waveform signal; and
the transceiver module is specifically configured to output the first waveform signal.

**25.** The communication apparatus according to any one of claims 20 to 24, wherein

the processing module is specifically configured to perform encoding processing on the first data stream, to obtain a first channel encoding code word; and
the processing module is specifically configured to process the first channel encoding code word by using the encoding neural network, to obtain the first symbol stream.

**26.** The communication apparatus according to claim 25, wherein

the processing module is specifically configured to process the first channel encoding code word by using the encoding neural network, to obtain a first intermediate symbol; and
the processing module is specifically configured to perform filtering processing on the first intermediate symbol by using a filtering neural network, to obtain the first symbol stream, wherein intersymbol interference is introduced into the first symbol stream.

**27.** The communication apparatus according to claim 25 or 26, wherein
that the encoding neural network reuses a part or all of a decoding neural network comprises:
reusing, by the encoding neural network, a part or all of a model of the decoding neural network, a loss function of the decoding neural network, a reward function of the decoding neural network, and/or a parameter of the decoding neural network.

**28.** A communication apparatus, comprising:

a transceiver module, configured to obtain a first data stream, wherein
the transceiver module is further configured to receive a first symbol stream, wherein the first symbol stream is from a transmit end, the first symbol stream is obtained by the transmit end by processing the first data stream by using an encoding neural network, and the encoding neural network reuses a part or all of a decoding neural network; and
a processing module, configured to process the first symbol stream by using the decoding neural network, to obtain a second data stream, wherein
the processing module is further configured to train the decoding neural network based on the first data stream and the second data stream.

**29.** The communication apparatus according to claim 28, wherein

the processing module is specifically configured to process the first data stream and the second data stream by using the decoding neural network, to obtain a first function, wherein the first function is a loss function and/or a reward function;
the processing module is specifically configured to process the first function by using the decoding neural network, to obtain a first gradient; and
the processing module is specifically configured to train the decoding neural network by using the first gradient.

**30.** The communication apparatus according to claim 29, wherein
the transceiver module is further configured to send the first gradient to the transmit end, wherein the first gradient is used to train the encoding neural network.

**31.** The communication apparatus according to claim 29, wherein

the processing module is further configured to generate a first weight by using the decoding neural network, wherein the first weight is a weight of the decoding neural network; and
the processing module is further configured to send the first weight to the transmit end, wherein the first weight is used to train the encoding neural network.

**32.** The communication apparatus according to any one of claims 28 to 31, wherein

the processing module is further configured to process the first data stream and the second data stream by using the decoding neural network, to obtain a second function, wherein the second function is a loss function and/or a reward function; and
the transceiver module is further configured to send the second function to the transmit end, wherein the second function is used to train the encoding neural network.

**33.** The communication apparatus according to any one of claims 28 to 32, wherein

the transceiver module is specifically configured to receive a first waveform signal, wherein the first waveform signal is obtained by the transmit end by performing filtering processing on the first symbol stream;
the processing module is specifically configured to perform quantization processing on the first waveform signal, to obtain a quantized symbol sequence, wherein one group of the first data streams is mapped to one or more of the quantized symbol sequences, bit flipping exists at most once in each symbol of the quantized symbol sequence, and the bit flipping is 0 to 1 or 1 to 0; and
the processing module is specifically configured to process a first sequence in the quantized symbol sequence by using the decoding neural network, to obtain the second data stream.

**34.** The communication apparatus according to claim 33, wherein

the transceiver module is specifically configured to receive the first waveform signal interfered by a first channel, wherein the first channel is a channel between the receive end and the transmit end; and
the processing module is specifically configured to perform quantization processing on the first waveform signal interfered by the first channel, to obtain the quantized symbol sequence.

**35.** The communication apparatus according to any one of claims 28 to 34, wherein

the processing module is specifically configured to process the first waveform signal by using the decoding neural network, to obtain a first channel decoding code word or a log-likelihood ratio; and
the processing module is specifically configured to process the first channel decoding code word or the log-likelihood ratio, to obtain the second data stream.

**36.** The communication apparatus according to claim 35, wherein

the processing module is specifically configured to perform quantization processing on the first waveform signal, to obtain the quantized symbol sequence; and
the processing module is specifically configured to process the first sequence in the quantized symbol sequence by using the decoding neural network, to obtain the first channel decoding code word or the log-likelihood ratio.

**37.** The communication apparatus according to any one of claims 34 to 36, wherein

when the first symbol stream comprises x symbol groups, and each of the symbol groups comprises n symbols, the first waveform signal comprises x symbol groups, wherein x is a positive integer greater than or equal to 1, and n is a positive integer greater than or equal to 1; and
the processing module performs quantization processing on n symbols in the first waveform signal, to obtain the quantized symbol sequence, a length of the quantized symbol sequence is nM, and a length of the first sequence in the quantized symbol sequence is $[(n - 1)M + 1, nM]$, wherein M is an oversampling rate of the receive end.

**38.** The communication apparatus according to claim 37, wherein

that the encoding neural network reuses a part or all of a decoding neural network comprises:
reusing, by the encoding neural network, a part or all of a model of the decoding neural network, a loss function of the decoding neural network, a reward function of the decoding neural network, and/or a parameter of the decoding neural network.

39. A communication apparatus, comprising a processor and a transceiver connected to the processor, wherein the processor is configured to execute program code stored in a memory, and when the program code is executed, the apparatus is enabled to perform the method according to any one of claims 1 to 8 and/or claims 9 to 19.

40. The communication apparatus according to claim 39, further comprising a memory storing the program code, wherein the memory is configured to transmit the program code to the processor.

41. A computer-readable storage medium, wherein the computer-readable storage medium has a program instruction, and when the program instruction is directly or indirectly executed, the method according to any one of claims 1 to 8 and/or claims 9 to 19 is performed.

42. A chip system, wherein the chip system comprises one or more processors and a memory, the memory stores a program instruction, and when the program instruction is executed in the one or more processors, the method according to any one of claims 1 to 8 and/or claims 9 to 19 is performed.

43. A computer program, comprising instructions, wherein when the instruction is run on a computer, the method according to any one of claims 1 to 8 and/or claims 9 to 19 is performed.

44. A computer program product, comprising instructions, wherein when the instruction is run on a computer, the method according to any one of claims 1 to 8 and/or claims 9 to 19 is performed.

45. A communication system, wherein the communication system comprises the communication apparatus according to any one of claims 20 to 27 and/or the communication apparatus according to any one of claims 28 to 38.

FIG. 1

FIG. 2

$$\frac{\partial L}{\partial s_i}$$

$$\frac{\partial L}{\partial w_{ij}}$$

$w_{ij}$

FIG. 3

| Agent | Action (action) → ← Reward (reward) | Environment |

State (state)

FIG. 4

$x$ → Encoder $f$ → $z$ → Decoder $g$ → $\hat{x}$

FIG. 5

Terminal
device

Network
device

⋮

Terminal
device

FIG. 6a

Terminal
device

Terminal
device

FIG. 6b

FIG. 7

```
┌──────────────┐                                    ┌──────────────┐
│ Transmit end │                                    │ Receive end  │
└──────────────┘                                    └──────────────┘
```

801. The transmit end obtains a first data stream

802. The transmit end processes the first data stream by using an encoding neural network, to obtain a first symbol stream

803. The transmit end sends the first symbol stream to the receive end

804. The receive end processes the first symbol stream by using a decoding neural network, to obtain a second data stream

805. The receive end trains the decoding neural network based on the first data stream and the second data stream

806. The receive end sends a first function, a second function, a first gradient, and/or a first weight to the transmit end

807. The transmit end trains the encoding neural network by using the first function, the second function, the first gradient, and/or the first weight

FIG. 8

FIG. 9

FIG. 10

FIG. 11

Network device | Terminal device

S1. Configure a hyper parameter

S2. Initialize a decoding neural network

S3. Send a weight of the decoding neural network

S4. Initialize an encoding neural network

S5. Send a training sample

S6. Train the decoding neural network

S7. Send the weight of the decoding neural network

Unsupervised learning

S8. Train a first neural network

S9. Send the training sample

S10. Calculate a loss function

S11. Send a reward

Reinforcement learning

S12. Train the encoding neural network

Repeat steps S5 to S12

S13. Stop training feedback

S14. Stop training

S15. Stop training instruction

S16. Error packet monitoring

S17. Retraining request

FIG. 12

Sample

| Cyclic prefix | Data | Cyclic prefix | Data | Cyclic prefix | Data | Cyclic prefix | Data | ... |

Batch (batch)     Training data frame

<Reward aggregation level> sample

| Cyclic prefix | Reward | Cyclic redundant code | Cyclic prefix | Reward | Cyclic redundant code | Cyclic prefix | Reward | Cyclic redundant code | ... |

Batch (batch)     Reward feedback frame

FIG. 13

FIG. 14

Transmit end

Receive end

1501. The transmit end obtains a first data stream

1502. The transmit end processes the first data stream by using an encode modulation module, to obtain a first channel encoding code word

1503. The transmit end processes the first channel encoding code word by using a encoding neural network, to obtain a first symbol stream

1504. The transmit end performs filtering processing on the first symbol stream by using a first filter, to obtain a first waveform signal

1505. The transmit end sends the first waveform signal to the receive end

1506. The receive end performs filtering processing on the first waveform signal, to obtain a second waveform signal

1507. The receive end performs quantization processing on the second waveform signal, to obtain a quantized symbol sequence

1508. The receive end processes a first sequence in the quantized symbol sequence by using a decoding neural network, to obtain the first channel decoding code word or a log-likelihood ratio

1509. The receive end processes the first channel decoding code word or the log-likelihood ratio by using a decode modulation module, to obtain a second data stream

FIG. 15

```
┌──────────┐     ┌──────────┐     ┌──────────┐     ┌──────────┐
│First data│ ──▶ │  First   │ ──▶ │ Encoding │ ──▶ │  First   │
│  stream  │     │  module  │     │  neural  │     │  filter  │
│          │     │          │     │ network  │     │          │
└──────────┘     └──────────┘     └──────────┘     └──────────┘
```

First data stream → First module → Encoding neural network → First filter → Channel

Channel → Second filter → Analog to digital converter → Decoding neural network → Second module → Second data stream

**FIG. 16a**

**FIG. 16b**

Super symbol                    Super symbol

$1/Mf_s$                $1/f_s$

Time

FIG. 16c

Extrinsic information
(extrinsic information)

Decode
modulation
module

Decoding
neural network

Soft decision
decoder

Priori log-likelihood ratio
(a priori LLR)

FIG. 17

FIG. 18

[1, 1, 0]    ⟶    [0, 0, 0, 0, 0, 0]
[1, 1, 1]    ⟶    [0, 0, 0, 0, 0, 1]
                      [0, 0, 0, 0, 1, 1]
[1, 0, 1]    ⟶    [0, 0, 0, 1, 1, 1]
[1, 0, 0]    ⟶    [0, 0, 1, 1, 1, 1]
                      [0, 1, 1, 1, 1, 1]
[0, 1, 0]    ⟶    [1, 0, 0, 0, 0, 0]
                      [1, 1, 0, 0, 0, 0]
[0, 1, 1]    ⟶    [1, 1, 1, 0, 0, 0]
[0, 0, 1]    ⟶    [1, 1, 1, 1, 0, 0]
                      [1, 1, 1, 1, 1, 0]
[0, 0, 0]    ⟶    [1, 1, 1, 1, 1, 1]

FIG. 19

56

FIG. 20

FIG. 21

FIG. 22

FIG. 23

FIG. 24

Communication apparatus 2500

2501

2502

| Transceiver module | | Processing module |

FIG. 25

Communication apparatus 2600

2601

2602

| Transceiver module | | Processing module |

FIG. 26

## INTERNATIONAL SEARCH REPORT

| International application No. |
| --- |
| **PCT/CN2021/120839** |

### A. CLASSIFICATION OF SUBJECT MATTER

H04L 1/00(2006.01)i; H04L 25/03(2006.01)i; G06N 3/02(2006.01)i

According to International Patent Classification (IPC) or to both national classification and IPC

### B. FIELDS SEARCHED

Minimum documentation searched (classification system followed by classification symbols)

H04L, G06N

Documentation searched other than minimum documentation to the extent that such documents are included in the fields searched

Electronic data base consulted during the international search (name of data base and, where practicable, search terms used)

CNABS; CNTXT; VEN; EPTXT; WOTXT; USTXT; CNKI; 3GPP: 神经网络, 训练, 学习, 发送, 接收, 符号, 编码, 译码, 解码, 复用, 损失函数, 一致, 参数, 梯度, neural network, training, learn, send, transmit, receive, symbol, coding, decoding, loss function, same, parameter, gradient

### C. DOCUMENTS CONSIDERED TO BE RELEVANT

| Category* | Citation of document, with indication, where appropriate, of the relevant passages | Relevant to claim No. |
| --- | --- | --- |
| Y | CN 110460402 A (HARBIN ENGINEERING UNIVERSITY) 15 November 2019 (2019-11-15)<br>  claims 1-7 | 1-45 |
| Y | WO 2020092391 A1 (THE UNIVERSITY OF TEXAS SYSTEM) 07 May 2020 (2020-05-07)<br>  claim 26, description paragraphs [0066]-[0079] | 1-45 |
| A | CN 110753937 A (NOKIA TECHNOLOGY CO., LTD.) 04 February 2020 (2020-02-04)<br>  entire document | 1-45 |
| A | CN 111327381 A (TSINGHUA UNIVERSITY) 23 June 2020 (2020-06-23)<br>  entire document | 1-45 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **02 November 2021** | **16 November 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/120839**

| Patent document cited in search report | | | Publication date (day/month/year) | Patent family member(s) | | | Publication date (day/month/year) |
|---|---|---|---|---|---|---|---|
| CN | 110460402 | A | 15 November 2019 | None | | | |
| WO | 2020092391 | A1 | 07 May 2020 | None | | | |
| CN | 110753937 | A | 04 February 2020 | EP | 3418948 | A1 | 26 December 2018 |
| | | | | EP | 3418948 | B1 | 03 June 2020 |
| | | | | WO | 2018233932 | A1 | 27 December 2018 |
| | | | | US | 2020177418 | A1 | 04 June 2020 |
| CN | 111327381 | A | 23 June 2020 | WO | 2021155744 | A1 | 12 August 2021 |

Form PCT/ISA/210 (patent family annex) (January 2015)

**EP 4 210 252 A1**

**Patent documents cited in the description**

- CN 202011062368